(19) Europäisches Patentamt
European Patent Office
Office européen des brevets

(11) **EP 4 697 266 A1**

(12) **EUROPEAN PATENT APPLICATION**
published in accordance with Art. 153(4) EPC

(43) Date of publication:
**18.02.2026 Bulletin 2026/08**

(21) Application number: **24802693.2**

(22) Date of filing: **12.04.2024**

(51) International Patent Classification (IPC):
**G06T 7/55** (2017.01)

(52) Cooperative Patent Classification (CPC):
**G06T 7/55; G06T 7/73**

(86) International application number:
**PCT/CN2024/087484**

(87) International publication number:
**WO 2024/230407 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.05.2023 CN 202310507857**

(71) Applicant: **ZTE CORPORATION**
**Shenzhen, Guangdong 518057 (CN)**

(72) Inventor: **YU, Weina**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **VOID CORRECTION METHOD, ELECTRONIC DEVICE, AND COMPUTER-READABLE MEDIUM**

(57) Provided in the present application are a void correction method, an electronic device, and a computer-readable medium. The void correction method comprises: acquiring a visible image sequence and a first depth image sequence having the same acquisition frame rate; for each first depth image in the first depth image sequence, on the basis of the first depth image and a visible image in the visible image sequence meeting a preset condition, determining whether the first depth image is a depth image having a void, wherein the visible image meeting the preset condition is a visible image of which the position corresponds to that of the first depth image; when it is determined that the first depth image is a depth image having a void, determining void position information of the first depth image; and, on the basis of N first depth images ahead of the first depth image, correcting the depth information of the void corresponding to the void position information, N being 1 or 2.

FIG. 1

EP 4 697 266 A1

**Description**

CROSS REFERENCE TO RELATED APPLICATIONS

The present disclosure claims the priority to Chinese Patent Application No. 202310507857.1 filed with the CNIPA on May 6, 2023, the contents of which are incorporated herein by reference in their entirety.

TECHNICAL FIELD

The present disclosure relates to, but is not limited to, the technical field of image processing.

BACKGROUND

Gesture interaction with an article is needed in some scenarios, for example, when viewing cultural relics in a museum. However, a significant problem of the current gesture recognition is abnormal detection of joint points of a hand, which causes inaccuracy of interaction position and poor user experience.

SUMMARY

Embodiments of the present disclosure provide a void correction method, an electronic device, and a computer-readable medium.

In a first aspect, an embodiment of the present disclosure provides a void correction method, including: acquiring a visible light image sequence and a first depth image sequence which have a same frame acquisition frequency; for each first depth image frame in the first depth image sequence, determining whether a first depth image is a void-containing depth image based on the first depth image and a visible light image in the visible light image sequence which meets a preset condition, wherein the visible light image which meets the preset condition is a visible light image having a position corresponding to a position of the first depth image; and in a case where it is determined that the first depth image is the void-containing depth image, determining void position information in the first depth image, and correcting depth information of a void corresponding to the void position information based on N first depth image frames before the first depth image, wherein N is 1 or 2.

In a second aspect, an embodiment of the present disclosure provides an electronic device, including: at least one processor; and a storage device having stored therein at least one program which, when executed by the at least one processor, implements any of the void correction methods described herein.

In a third aspect, an embodiment of the present disclosure provides a computer-readable medium having stored therein a computer program which, when executed by a processor, implements any of the void correction methods described herein.

BRIEF DESCRIPTION OF DRAWINGS

FIG. 1 is a flowchart illustrating a gesture recognition method according to an embodiment of the present disclosure;
FIG. 2 is a flowchart illustrating a human-machine interaction method according to another embodiment of the present disclosure;
FIG. 3 is a flowchart illustrating a hand joint point detection method according to another embodiment of the present disclosure;
FIG. 4 is a flowchart illustrating a void correction method according to another embodiment of the present disclosure;
FIG. 5 is a flowchart illustrating a training method for a hand region acquisition model according to another embodiment of the present disclosure;
FIG. 6 is a flowchart illustrating a training method for a hand joint point detection model according to another embodiment of the present disclosure;
FIG. 7 is a flowchart illustrating a training method for a dynamic gesture model according to another embodiment of the present disclosure;
FIG. 8 is a block diagram of an electronic device according to another embodiment of the present disclosure; and
FIG. 9 is a schematic diagram of a finger web joint point according to an embodiment of the present disclosure.

DETAIL DESCRIPTION OF EMBODIMENTS

In order to enable those of ordinary skill in the art to better understand the technical solutions of the present disclosure, a void correction method, an electronic device, and a computer-readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

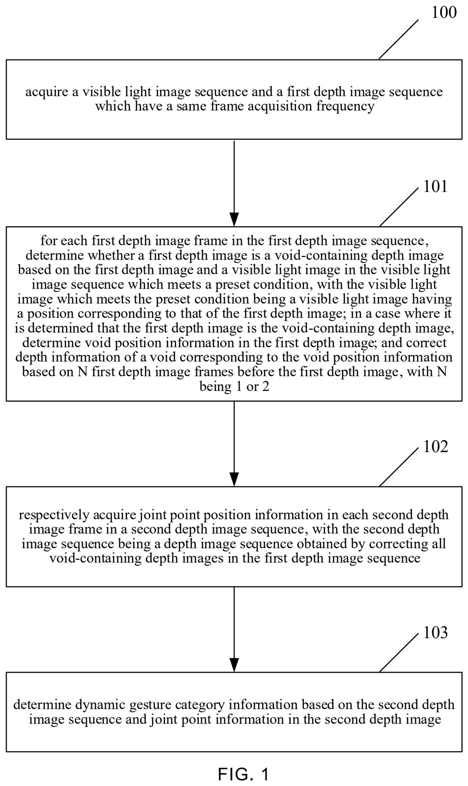

FIG. 1 is a flowchart illustrating a gesture recognition method according to an embodiment of the present disclosure.

In a first aspect, referring to FIG. 1, an embodiment of the present disclosure provides a gesture recognition method, which may include operations 100 to 103.

At operation 100, a visible light image sequence and a first depth image sequence which have a same frame acquisition frequency are acquired.

In some exemplary embodiments, the visible light image sequence may be an RGB image sequence or a grayscale image sequence.

In some example embodiments, the visible light image sequence and the first depth image sequence may be acquired from a visible light video stream and a first depth video stream which have the same frame acquisition frequency.

In some exemplary embodiments, the visible light video stream may be decoded to obtain a visible light image frame sequence, the visible light image frame sequence is placed in a first queue, and a part of the visible light image frame sequence which is placed in the first queue is the visible light image sequence to be acquired; the first depth video stream is decoded to obtain a first depth image frame sequence, the first depth image frame sequence is placed in a second queue, and a part of the first depth image frame sequence which is placed in the second queue is the first depth image sequence to be acquired; and the first queue and the second queue have a same size that is M, with M being an integer greater than or equal to 1.

In some exemplary embodiments, M is an integer greater than or equal to 8 and less than or equal to 16.

In some exemplary embodiments, the visible light video stream and the first depth video stream may be obtained by performing a corresponding process on originally acquired 3D data.

In some exemplary embodiments, the visible light image sequence in the first queue is aligned with the first depth image sequence in the second queue, that is, a visible light image and a first depth image at a same position are acquired simultaneously.

In some exemplary embodiments, visible light images in the visible light image frame sequence are subjected to first preprocessing and then placed in the first queue, and first depth images in the first depth image frame sequence are subjected to second preprocessing and then placed in the second queue.

In some exemplary embodiments, the first preprocessing may be at least one of size scaling or pixel value normalization.

In some exemplary embodiments, the second preprocessing may be at least one of size scaling or pixel value normalization.

In some exemplary embodiments, visible light images obtained by performing the first preprocessing on the visible light images in the visible light image frame sequence meet an input requirement of a hand region acquisition model.

In some exemplary embodiments, first depth images obtained by performing the second preprocessing on the first depth images in the first depth image frame sequence meet the input requirement of the hand region acquisition model.

At operation 101, for each first depth image frame in the first depth image sequence, whether a first depth image is a void-containing depth image is determined based on the first depth image and a visible light image in the visible light image sequence which meets a preset condition, with the visible light image which meets the preset condition being a visible light image having a position corresponding to that of the first depth image; in a case where it is determined that the first depth image is the void-containing depth image, void position information in the first depth image is determined; and depth information of a void corresponding to the void position information is corrected based on N first depth image frames before the first depth image, with N being 1 or 2.

In some exemplary embodiments, after the depth information of the void corresponding to the void position information is corrected based on the N first depth image frames before the first depth image, the operation of determining, for each first depth image frame in the first depth image sequence, whether a first depth image is a void-containing depth image based on the first depth image and a visible light image in the visible light image sequence which has a position corresponding to that of the first depth image is continuously performed until no void-containing depth image exists in the first depth image sequence.

In some exemplary embodiments, determining whether the first depth image is the void-containing depth image based on the first depth image and the visible light image in the visible light image sequence which has the position corresponding to that of the first depth image includes: determining a binary image of the visible light image and a binary image of the first depth image; determining a difference between the binary image of the visible light image and the binary image of the first depth image; in a case where the difference is less than a first preset threshold, determining the first depth image as a depth image capable of being used as a reference frame; and in a case where the difference is greater than the first preset threshold, determining the first depth image as the void-containing depth image.

In some exemplary embodiments, when determining the difference between the binary image of the visible light image and the binary image of the first depth image, the sum of absolute values of differences between all pixel points of the binary image of the visible light image and all pixel points of the binary image of the first depth image may be determined; or, a normalized value of the sum of the absolute values of the differences between all the pixel points of the binary image of the visible light image and all the pixel points of the binary image of the first depth image may be determined; or, an average of the absolute values of the differences between all the pixel points of the binary image of the visible light image and all the pixel points of the binary image of the first depth image may be determined; or, the difference may be obtained by a calculation with other methods.

In some exemplary embodiments, determining the void position information in the first depth image includes: determining a binary image of the first depth image; and determining position information of a pixel with a pixel value of 0 in the binary image as the void position information.

In some exemplary embodiments, correcting the depth information of the void corresponding to the void position information based on the N first depth image frames before the first depth image includes: acquiring joint point position information in the first depth image; determining whether the void corresponding to the void position information is within a preset region corresponding to a joint point corresponding to the joint point position information based on the void position information and the joint point position information; in a case where the void is within the preset region corresponding to the joint point, determining the corrected depth information of the void to be a weighted average of a basic filling value, depth information of the void corresponding to the void position information in the N first depth image frames before the first depth image, and prior information of the joint point; and in a case where the void is beyond the preset region corresponding to the joint point, determining the corrected depth information of the void based on the basic filling value, depth information between two joint points closest to the void, and the depth information of the void corresponding to the void position information in the N first depth image frames before the first depth image.

In some exemplary embodiments, acquiring the joint point position information in the first depth image includes: inputting the visible light image in the visible light image sequence which has the position corresponding to that of the first depth image into the hand region acquisition model to obtain fifth hand region information in the visible light image; acquiring a fourth target sub-image corresponding to the fifth hand region information from the first depth image; and inputting the fourth target sub-image into a hand joint point detection model to obtain joint point information corresponding to the fifth hand region information.

In some exemplary embodiments, in addition to the fifth hand region information in the visible light image, at least one of palm-back-of-hand category information or crowd category information is further obtained by inputting the visible light image in the visible light image sequence which has the position corresponding to that of the first depth image into the hand region acquisition model.

In some exemplary embodiments, determining whether the void corresponding to the void position information is within the preset region corresponding to the joint point corresponding to the joint point position information based on the void position information and the joint point position information includes: calculating a distance between the void corresponding to the void position information and the joint point corresponding to the joint point position information, and determining that the void is within the preset region corresponding to the joint point in a case where the distance is less than or equal to a radius of an inscribed circle or a circumscribed circle of the preset region; and in a case where the distance is greater than the radius of the inscribed circle or the circumscribed circle of the preset region, determining that the void is beyond the preset region corresponding to the joint point.

In some exemplary embodiments, determining the corrected depth information of the void to be the weighted average of the basic filling value, the depth information of the void corresponding to the void position information in the N first depth image frames before the first depth image, and the prior information of the joint point includes: determining the corrected depth information of the void by the formula

$$D = \sum_{i=1}^{N} \lambda_{refi} D_{refi} + \lambda_{basic} D_{basic} + \sum_{j} \lambda_{avgj} D_{avgj},$$

where D is the corrected depth information of the void, $\lambda_{refi}$ is a weight of the depth information of the void corresponding to the void position information in i first depth image images before the first depth image, $D_{refi}$ is the depth information of the void corresponding to the void position information in the i first depth image images before the first depth image, $\lambda_{basic}$ is a weight of the basic filling value, $D_{basic}$ is the basic filling value, $\lambda_{avgj}$ is a weight of $j^{th}$ prior information of the joint point, and $D_{avgj}$ is the $j^{th}$ prior information of the joint point.

In some exemplary embodiments, the basic filling value may be obtained with a linear void filling method or a morphological operation method (such as a dilation operation) using OpenCV.

In some exemplary embodiments, the prior information of the joint point includes: length prior information and angle prior information of the joint point.

In some exemplary embodiments, the length prior information of the joint point is an average of length information of a joint point closest to the void corresponding to all historical visible light images in B historical visible light image sequences and all historical depth images in B historical depth image sequences, with the B historical visible light image sequences and the B historical depth image sequences corresponding to a same dynamic gesture category, and B being an integer greater than or equal to 1.

In some exemplary embodiments, the length information of the joint point closest to the void is a ratio of length information between adjacent joint points to width information of a hand region corresponding to hand region information in the visible light image.

In some exemplary embodiments, the length information of the joint point closest to the void is a ratio of length information between adjacent joint points to length information of a hand region corresponding to hand region information in the visible light image.

In some exemplary embodiments, the angle prior information of the joint point is an average of offset angle information of a joint point closest to the void relative to a wrist joint point corresponding to all historical visible light images in B historical visible light image sequences and all historical depth images in B historical depth image sequences, with the B historical visible light image sequences and the B historical depth image sequences corresponding to a same dynamic gesture category

In some exemplary embodiments, the offset angle information of the joint point closest to the void relative to the wrist joint point refers to angle information between a straight line from the joint point closest to the void to a proximal interphalangeal joint point and a straight line from the proximal interphalangeal joint point to the wrist joint point. The joint point closest to the void and the proximal interphalangeal joint point belong to a same finger.

In some exemplary embodiments, when calculating the prior information of the joint point, the prior information of the joint point may be obtained by a calculation using the B historical visible light image sequences and B historical depth image sequences corresponding to dynamic gesture category information obtained by previous gesture recognition, or may be obtained by a calculation using B historical visible light image sequences and B historical depth image sequences corresponding to a default dynamic gesture category (e.g., a tap gesture).

In some exemplary embodiments, when calculating the prior information of the joint point, B historical visible light image sequences and B historical depth image sequences corresponding to a same dynamic gesture category of a same crowd category may be used for calculation to obtain the prior information of the joint point corresponding to the crowd category.

In some exemplary embodiments, B historical visible light image sequences and B historical depth image sequences corresponding to a same dynamic gesture category of crowd category information obtained by previous gesture recognition may be used for calculation to obtain the prior information of the joint point corresponding to the crowd category.

In some exemplary embodiments, B historical visible light image sequences and B historical depth image sequences corresponding to a same dynamic gesture category of a default crowd category (e.g., adults) may be used for calculation to obtain the prior information of the joint point corresponding to the crowd category.

In some exemplary embodiments, B historical visible light image sequences and B historical depth image sequences corresponding to dynamic gesture category information (obtained by previous gesture recognition) of crowd category information obtained by the previous gesture recognition may be used for calculation to obtain the prior information of the joint point corresponding to the crowd category.

In some exemplary embodiments, B historical visible light image sequences and B historical depth image sequences corresponding to a default dynamic gesture category of a default crowd category (e.g., adults) may be used for calculation to obtain the prior information of the joint point corresponding to the crowd category.

In some exemplary embodiments, determining the corrected depth information of the void based on the basic filling value, the depth information between the two joint points closest to the void, and the depth information of the void corresponding to the void position information in the N first depth image frames before the first depth image includes: determining depth information of the void corresponding to the void position information in the first depth image based on the depth information of the two joint points closest to the void in the first depth image; and determining the corrected depth information of the void to be a weighted average of the basic filling value, the depth information of the void corresponding to the void position information in the first depth image, and the depth information of the void corresponding to the void position information in the N first depth image frames before the first depth image.

In some exemplary embodiments, an interpolation operation may be performed on the depth information of the two joint points closest to the void in the first depth image to obtain the depth information of the void corresponding to the void position information in the first depth image; or the depth information of the two joint points closest to the void in the first depth image may be calculated by a region growing algorithm to obtain the depth information of the void corresponding to the void position information in the first depth image.

At operation 102, joint point position information in each second depth image frame in a second depth image sequence is respectively acquired, with the second depth image sequence being a depth image sequence obtained by correcting all void-containing depth images in the first depth image sequence.

In some exemplary embodiments, respectively acquiring the joint point position information in each second depth image frame in the second depth image sequence includes: for each second depth image frame, inputting a visible light image in the visible light image sequence which has a position corresponding to that of a second depth image into the hand region acquisition model to obtain first hand region information in the visible light image; acquiring a first target sub-image corresponding to the first hand region information from the second depth image; and inputting the first target sub-image into the hand joint point detection model to obtain joint point information corresponding to the first hand region information, with the joint point information corresponding to the first hand region information being the joint point position information in the second depth image.

In some exemplary embodiments, a position index of the visible light image in the visible light image sequence is the same as that of the second depth image in the second depth image sequence, with the visible light image being the visible light image in the visible light image sequence which has the position corresponding to that of the second depth image.

In some exemplary embodiments, the first hand region information refers to information of an image region including a hand and a part or all of a forearm.

In some exemplary embodiments, the hand includes fingers, a palm, and a wrist.

In some exemplary embodiments, the first hand region information may be coordinate information of 4 corners of the image region.

In some exemplary embodiments, the first hand region information may be coordinate information of one of corners of the image region, and width information and length information of the image region.

In some exemplary embodiments, at least one of palm-back-of-hand category information or crowd category information is further obtained by inputting the visible light image in the visible light image sequence which has the position corresponding to that of the second depth image into the hand region acquisition model.

In some exemplary embodiments, the palm-back-of-hand category information is configured to indicate whether the hand in the image region is a palm or a back of the hand.

In some exemplary embodiments, the crowd category information is configured to indicate a crowd category to which the hand in the image region belongs, for example, the crowd category may be the elderly, adults, or children.

In some exemplary embodiments, confidence corresponding to the first hand region information is further obtained by inputting the visible light image in the visible light image sequence which has the position corresponding to that the second depth image into the hand region acquisition model; and the first hand region information with the confidence greater than a second preset threshold is selected for subsequent processing, that is, for the operation of acquiring the first target sub-image corresponding to the first hand region information from the second depth image. Here, the first hand region information with the confidence greater than the second preset threshold is considered to be valid first hand region information; and the first hand region information with the confidence less than the second preset threshold is considered to be invalid first hand region information. The valid first hand region information is screened out based on the confidence, so that a range for subsequent acquisition of the joint point information is narrowed, and subsequent gesture recognition precision is improved.

In some exemplary embodiments, the first target sub-image corresponding to the first hand region information from the second depth image refers to a position of the first target sub-image in the second depth image being the same as that of the image region corresponding to the first hand region information in the visible light image.

In some exemplary embodiments, the joint point information includes: joint point information of finger joint points, joint point information of wrist joint points, and joint point information of forearm joint points; and the finger joint points include: proximal interphalangeal joint points, middle interphalangeal joint points, distal interphalangeal joint points, and fingertip joint points.

In some exemplary embodiments, the finger joint points further include: finger web joint points.

At operation 103, dynamic gesture category information is determined based on the second depth image sequence and joint point information in the second depth image.

In some exemplary embodiments, gesture category information may be at least one of finger forward taping, finger pinching, rotating, scaling, moving, or static gestures.

In some exemplary embodiments, determining the dynamic gesture category information based on the second depth image sequence and the joint point information in the second depth image includes: inputting the second depth image sequence and the joint point information in the second depth image into a dynamic gesture model to obtain the dynamic gesture category information.

In some exemplary embodiments, determining the dynamic gesture category information based on the second depth image sequence and the joint point information in the second depth image includes: for each second depth image frame, correcting joint point information of a fingertip joint point in the joint point information in the second depth image; and inputting the second depth image sequence and the corrected joint point information in the second depth image into the dynamic gesture model to obtain the dynamic gesture category information.

In some exemplary embodiments, correcting the joint point information of the fingertip joint point in the joint point information in the second depth image includes: acquiring a fingertip sub-image from the visible light image in the visible light image sequence which has the position corresponding to that of the second depth image based on the joint point information of the fingertip joint point; extracting contour information of a fingertip from the fingertip sub-image; and calculating curvatures of points on a contour of the fingertip based on the contour information of the fingertip, and taking position information of a convex point with a maximum curvature value as the corrected joint point information of the fingertip joint point.

In some exemplary embodiments, the fingertip sub-image refers to a sub-image including the fingertip.

In some exemplary embodiments, in order to correct the joint point information of each fingertip joint point, a fingertip sub-image of each fingertip needs to be acquired respectively, and contour information of a fingertip in the fingertip sub-image is extracted; and curvatures of points on a contour of the fingertip are calculated based on the contour information of the fingertip, and position information of a convex point with a maximum curvature value is taken as the corrected joint point information of the fingertip joint point.

In some exemplary embodiments, determining the dynamic gesture category information based on the second depth image sequence and the joint point information in the second depth image includes: for each second depth image frame, correcting the joint point information of a finger web joint point in the joint point information in the second depth image; and inputting the second depth image sequence and the corrected joint point information in the second depth image into the dynamic gesture model to obtain the dynamic gesture category information.

In some exemplary embodiments, correcting the joint point information of the finger web joint point in the joint point information in the second depth image includes: acquiring a finger web sub-image from the visible light image in the visible light image sequence which has the position corresponding to that of the second depth image based on the joint point information of the finger web joint point; extracting contour information of a finger web from the finger web sub-image; and calculating curvatures of points on a contour of the finger web based on the contour information of the finger web, and taking position information of a convex point with a maximum curvature value as the corrected joint point information of the finger web joint point.

In some exemplary embodiments, the finger web sub-image refers to a sub-image including the finger web.

In some exemplary embodiments, in order to correct the joint point information of each finger web joint point, a finger web sub-image of each finger web needs to be acquired respectively, and contour information of a finger web in the finger web sub-image is extracted; and curvatures of points on a contour of the finger web are calculated based on the contour information of the finger web, and position information of a concave point with a maximum curvature value is taken as the corrected joint point information of the finger web joint point.

In some exemplary embodiments, determining the dynamic gesture category information based on the second depth image sequence and the joint point information in the second depth image includes: for each second depth image frame, correcting the joint point information of a fingertip joint point and the joint point information of a finger web joint point in the joint point information in the second depth image; and inputting the second depth image sequence and the corrected joint point information in the second depth image into the dynamic gesture model to obtain the dynamic gesture category information.

In some exemplary embodiments, determining the dynamic gesture category information based on the second depth image sequence and the joint point information in the second depth image includes: for each second depth image frame, performing a kinematic constraint process on the joint point information in the second depth image; and inputting the second depth image sequence and the joint point information in the second depth image which is subjected to the kinematic constraint process into the dynamic gesture model to obtain the dynamic gesture category information.

In some exemplary embodiments, performing the kinematic constraint process on the joint point information in the second depth image includes at least one of:

   based on a value range of a first ratio of a length between two adjacent joint points to a corresponding hand region and first ratios of N second depth image frames before the second depth image, correcting the joint point information of the two adjacent joint points;
   based on a value range of offset angles of joint points other than a wrist joint point relative to the wrist joint point and offset angles in the N second depth image frames before the second depth image, correcting the joint point information of the joint points;
   based on a value range of a finger length and finger lengths in the N second depth image frames before the second depth image, correcting the joint point information of a fingertip joint point and a wrist joint point, with the finger length being a straight-line distance between the fingertip joint point and the wrist joint point;

based on angle information of a forearm joint point and the hand and angle information in the N second depth image frames before the second depth image, correcting the joint point information of a wrist joint point and a proximal interphalangeal joint point, with the angle information of the forearm joint point and the hand being angle information of an angle between a straight line determined by the forearm joint point and the wrist joint point and a straight line determined by the wrist joint point and the proximal interphalangeal joint point;

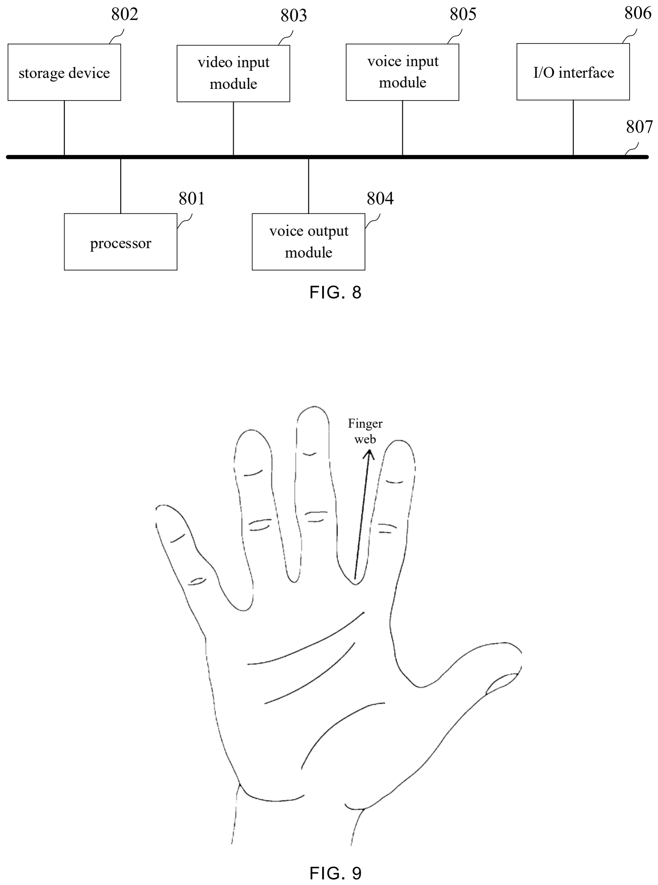

based on a value range of respective distances between a finger web joint point (shown in FIG. 9) and two finger joint points closest to the finger web joint point and respective distances between the finger web joint point and the two finger joint points closest to the finger joint point in each of the N second depth image frames before the second depth image, correcting the joint point information of the two finger joint points closest to the finger web joint point; or

based on a value range of a bending degree of a finger relative to a palm and a back of the hand and bending degrees in the N second depth image frames before the second depth image, correcting the joint point information of a finger joint point.

In some exemplary embodiments, the corresponding hand region refers to a hand region corresponding to hand region information which is obtained by inputting a visible light image into the hand region acquisition model.

In some exemplary embodiments, the first ratio of the length between the two adjacent joint points to the corresponding hand region is a first ratio of the length between the two adjacent joint points to a length of the corresponding hand region.

In some exemplary embodiments, the first ratio of the length between the two adjacent joint points to the corresponding hand region is a first ratio of the length between the two adjacent joint points to a width of the corresponding hand region.

In some exemplary embodiments, the value range of the first ratio may be determined based on a maximum value and a minimum value of first ratios corresponding to all historical visible light images in C historical visible light image sequences and all historical depth images in C historical depth image sequences, with the C historical visible light image sequences and the C historical depth image sequences corresponding to a same dynamic gesture category, and C being an integer greater than or equal to 1.

In some exemplary embodiments, when calculating the value range of the first ratio, the value range of the first ratio may be obtained by a calculation using C historical visible light image sequences and C historical depth image sequences corresponding to dynamic gesture category information obtained by previous gesture recognition, or may be obtained by a calculation using C historical visible light image sequences and C historical depth image sequences corresponding to a default dynamic gesture category (e.g., a tap gesture).

In some exemplary embodiments, when calculating the value range of the first ratio, C historical visible light image sequences and C historical depth image sequences corresponding to a same dynamic gesture category of a same crowd category may be used for calculation to obtain the value range of the first ratio corresponding to the crowd category.

In some exemplary embodiments, C historical visible light image sequences and C historical depth image sequences corresponding to a same dynamic gesture category of crowd category information obtained by previous gesture recognition may be used for calculation to obtain the value range of the first ratio corresponding to the crowd category.

In some exemplary embodiments, C historical visible light image sequences and C historical depth image sequences corresponding to a same dynamic gesture category of a default crowd category (e.g., adults) may be used for calculation to obtain the value range of the first ratio corresponding to the crowd category.

In some exemplary embodiments, C historical visible light image sequences and C historical depth image sequences corresponding to dynamic gesture category information (obtained by previous gesture recognition) of crowd category information obtained by the previous gesture recognition may be used for calculation to obtain the value range of the first ratio corresponding to the crowd category.

In some exemplary embodiments, C historical visible light image sequences and C historical depth image sequences corresponding to a default dynamic gesture category of a default crowd category (e.g., adults) may be used for calculation to obtain the value range of the first ratio corresponding to the crowd category.

In some exemplary embodiments, correcting the joint point information of the two adjacent joint points based on the value range of the first ratio of the length between the two adjacent joint points to the corresponding hand region and the first ratios in the N second depth image frames before the second depth image includes:

in a case where the first ratio corresponding to the two adjacent joint points in the second depth image is greater than a maximum value in the value range of the first ratio and a first intermediate value between the first ratio corresponding to the two adjacent joint points in the second depth image and the first ratios in the N second depth image frames before the second depth image is greater than the maximum value in the value range of the first ratio, taking the maximum value in the value range of the first ratio as the first ratio corresponding to the two adjacent joint points in the second depth image, and correcting the joint point information of the two adjacent joint points based on the maximum value in the value range of the first ratio;

in a case where the first ratio corresponding to the two adjacent joint points in the second depth image is greater than the maximum value in the value range of the first ratio and the first intermediate value between the first ratio corresponding to the two adjacent joint points in the second depth image and the first ratios in the N second depth image frames before the second depth image is less than the maximum value in the value range of the first ratio, taking the first intermediate value as the first ratio corresponding to the two adjacent joint points in the second depth image, and correcting the joint point information of the two adjacent joint points based on the first intermediate value;

in a case where the first ratio corresponding to the two adjacent joint points in the second depth image is less than a minimum value in the value range of the first ratio and a second intermediate value between the first ratio corresponding to the two adjacent joint points in the second depth image and the first ratios in the N second depth image frames before the second depth image is less than the minimum value in the value range of the first ratio, taking the minimum value in the value range of the first ratio as the first ratio corresponding to the two adjacent joint points in the second depth image, and correcting the joint point information of the two adjacent joint points based on the minimum value in the value range of the first ratio; and

in a case where the first ratio corresponding to the two adjacent joint points in the second depth image is less than the minimum value in the value range of the first ratio and the second intermediate value between the first ratio corresponding to the two adjacent joint points in the second depth image and the first ratios in the N second depth image frames before the second depth image is greater than the minimum value in the value range of the first ratio, taking the second intermediate value as the first ratio corresponding to the two adjacent joint points in the second depth image, and correcting the joint point information of the two adjacent joint points based on the second intermediate value.

In some exemplary embodiments, the offset angles of the joint points other than the wrist joint point relative to the wrist joint point refer to angle information between a straight line from each of the joint points to a proximal interphalangeal joint point and a straight line from the proximal interphalangeal joint point to the wrist joint point, with the joint points and the proximal interphalangeal joint point belonging to a same finger.

In some exemplary embodiments, the value range of the offset angles may be determined based on a maximum value and a minimum value of offset angles corresponding to all historical visible light images in C historical visible light image sequences and all historical depth images in C historical depth image sequences, with the C historical visible light image sequences and the C historical depth image sequences corresponding to a same dynamic gesture category, and C being an integer greater than or equal to 1.

In some exemplary embodiments, when calculating the value range of the offset angles, the value range of the offset angles may be obtained by a calculation using C historical visible light image sequences and C historical depth image sequences corresponding to dynamic gesture category information obtained by previous gesture recognition, or may be obtained by a calculation using C historical visible light image sequences and C historical depth image sequences corresponding to a default dynamic gesture category (e.g., a tap gesture).

In some exemplary embodiments, when calculating the value range of the offset angles, C historical visible light image sequences and C historical depth image sequences corresponding to a same dynamic gesture category of a same crowd category may be used for calculation to obtain the value range of the offset angles corresponding to the crowd category.

In some exemplary embodiments, C historical visible light image sequences and C historical depth image sequences corresponding to a same dynamic gesture category of crowd category information obtained by previous gesture recognition may be used for calculation to obtain the value range of the offset angles corresponding to the crowd category.

In some exemplary embodiments, C historical visible light image sequences and C historical depth image sequences corresponding to a same dynamic gesture category of a default crowd category (e.g., adults) may be used for calculation to obtain the value range of the offset angles corresponding to the crowd category.

In some exemplary embodiments, C historical visible light image sequences and C historical depth image sequences corresponding to dynamic gesture category information (obtained by previous gesture recognition) of crowd category information obtained by the previous gesture recognition may be used for calculation to obtain the value range of the offset angles corresponding to the crowd category.

In some exemplary embodiments, C historical visible light image sequences and C historical depth image sequences corresponding to a default dynamic gesture category of a default crowd category (e.g., adults) may be used for calculation to obtain the value range of the offset angles corresponding to the crowd category.

In some exemplary embodiments, correcting the joint point information of the joint points based on the value range of the offset angles of the joint points other than the wrist joint point relative to the wrist joint point and the offset angles in the N second depth image frames before the second depth image includes:

in a case where the offset angles in the second depth image are greater than a maximum value in the value range of the offset angles and a third intermediate value between the offset angles in the second depth image and the offset angles in the N second depth image frames before the second depth image is greater than the maximum value in the value range of the offset angles, taking the maximum value in the value range of the offset angles as the offset angles in the second depth image, and correcting the joint point information of the joint points based on the maximum value in the value range of the offset angles;

in a case where the offset angles in the second depth image are greater than the maximum value in the value range of the offset angles and a fourth intermediate value between the offset angles in the second depth image and the offset angles in the N second depth image frames before the second depth image is less than the maximum value in the value range of the offset angles, taking the fourth intermediate value as the offset angles in the second depth image, and correcting the joint point information of the joint points based on the fourth intermediate value;

in a case where the offset angles in the second depth image are less than a minimum value in the value range of the offset angles and the third intermediate value between the offset angles in the second depth image and the offset angles in the N second depth image frames before the second depth image is less than the minimum value in the value range of the offset angles, taking the minimum value in the value range of the offset angles as the offset angles in the second depth image, and correcting the joint point information of the joint points based on the minimum value in the value range of the offset angles; and

in a case where the offset angles in the second depth image are less than the minimum value in the value range of the offset angles and the fourth intermediate value between the offset angles in the second depth image and the offset angles in the N second depth image frames before the second depth image is greater than the minimum value in the value range of the offset angles, taking the fourth intermediate value as the offset angles in the second depth image, and correcting the joint point information of the joint points based on the fourth intermediate value.

In some exemplary embodiments, the finger length refers to the straight-line distance between the fingertip joint point and the wrist joint point.

In some exemplary embodiments, determination of the value range of the finger length and a process of correcting the joint point information of the fingertip joint point and the wrist joint point are similar to the aforesaid determination of the value range of the first ratio and the aforesaid process of correcting the joint point information of the two adjacent joint points, and will not be described here again.

In some exemplary embodiments, determination of the value range of the angle information of the forearm joint point and the hand and a process of correcting the joint point information of the wrist joint point and the proximal interphalangeal joint point are similar to the aforesaid determination of the value range of the first ratio and the aforesaid process of correcting the joint point information of the two adjacent joint points, and will not be described here again.

In some exemplary embodiments, a value range of the angle information of the forearm joint point and the hand may also be determined with a sphere simulation method. Illustratively, a distance between the forearm joint point and the wrist joint point is taken as a diameter of a first sphere, a distance between the wrist joint point and the proximal interphalangeal joint point is taken as a diameter of a second sphere, and the value range of the angle information of the forearm joint point and the hand is determined from an intersection range of the first sphere and the second sphere.

In some exemplary embodiments, determination of the value range of the respective distances between the finger web joint point and the two finger joint points closest to the finger web joint point and a process of correcting the joint point information of the two finger joint points closest to the finger web joint point are similar to the aforesaid determination of the value range of the first ratio and the aforesaid process of correcting the joint point information of the two adjacent joint points, and will not be described here again.

In some exemplary embodiments, the bending degree of the finger relative to the palm and the back of the hand refers to an angle between a straight line from a proximal interphalangeal joint point to a middle interphalangeal joint point and a straight line from the proximal interphalangeal joint point to a wrist joint point.

In some exemplary embodiments, determination of the value range of the bending degree of the finger relative to the palm and the back of the hand and a process of correcting the joint point information of the finger joint point are similar to the aforesaid determination of the value range of the first ratio and the aforesaid process of correcting the joint point information of the two adjacent joint points, and will not be described here again.

In some exemplary embodiments, after acquiring the visible light image sequence and the first depth image sequence having the same frame acquisition frequency and before determining the void position information in the first depth image, the method further includes: determining the number of void-containing depth images in the first depth image sequence; and in a case where the number of the void-containing depth images in the first depth image sequence is greater than or equal to a third preset threshold, performing a data stream cleaning process on the visible light image sequence and the first depth image sequence, and determining the number of void-containing depth images in the first depth image sequence subjected to the data stream cleaning process until the number of the void-containing depth images in the first depth image sequence subjected to the data stream cleaning process is less than the third preset threshold.

In some exemplary embodiments, in a case where the number of the void-containing depth images in the first depth image sequence is less than the third preset threshold, the operation of determining the void position information in the first depth image is continuously performed.

In some exemplary embodiments, performing the data stream cleansing process on the visible light image sequence and the first depth image sequence includes: deleting A visible light image frames acquired earliest from the visible light image sequence, acquiring A visible light image frames that are acquired earliest after the visible light image sequence, and adding the acquired A visible light image frames to the visible light image sequence, with A being an integer greater than or equal to 1; and deleting A first depth image frames acquired earliest from the first depth image sequence, acquiring A first depth image frames that are acquired earliest after the first depth image sequence, and adding the acquired A first depth image frames to the first depth image sequence.

In some exemplary embodiments, after determining the dynamic gesture category information based on the second depth image sequence and the joint point information in the second depth image, the method further includes: acquiring original hand contour data from the visible light images in the visible light image sequence; preprocessing the original hand contour data to obtain intermediate hand contour data representing a continuous contour; generating a G2-continuous smooth curve of a hand contour based on the intermediate hand contour data; and performing filling and rendering based on the smooth curve of the hand contour.

In some exemplary embodiments, the original hand contour data may be acquired with a method using OpenCV.

In some exemplary embodiments, the preprocessing includes: at least one of denoising, filtering, or the region growing algorithm.

In some exemplary embodiments, a method of computer graphics may be adopted to generate the G2-continuous smooth curve of the hand contour.

In some exemplary embodiments, performing filling and rendering based on the smooth curve of the hand contour includes: transforming the originally acquired 3D data into 2D data corresponding to a 2D coordinate system through coordinate system transformation; mapping parameter information of the 3D data in space to a 2D plane; and performing, based on the smooth curve of the hand contour, pixel-level rendering on an interior of the hand contour with a 2D renderer to obtain a 2D mesh image.

In some exemplary embodiments, the parameter information may be position, orientation, and size.

In some exemplary embodiments, depth information is not considered when mapping the parameter information of the 3D data in space to the 2D plane, so that the amount of computation is greatly reduced.

In some exemplary embodiments, when performing, based on the smooth curve of the hand contour, pixel-level rendering on the interior of the hand contour with the 2D renderer to obtain the 2D mesh image, merely the interior of the hand contour is rendered, the rendering is performed merely at the pixel level, and the number of vertices of triangular meshes is reduced, so that the amount of computation is reduced.

In some exemplary embodiments, after determining the dynamic gesture category information based on the second depth image sequence and the joint point information in the second depth image, the method further includes: performing a data stream cleaning process on the visible light image sequence and the first depth image sequence.

In some exemplary embodiments, after determining the dynamic gesture category information based on the second depth image sequence and the joint point information in the second depth image, the method further includes: executing an operation corresponding to the gesture category information.

In some exemplary embodiments, the operation corresponding to the gesture category information is opening or closing a corresponding window.

With the gesture recognition method provided in the embodiments of the present disclosure, the joint point position information is acquired after the depth information of the void in the depth image is corrected, so that accuracy of the joint point position information is improved, which improves gesture recognition accuracy.

In some exemplary embodiments, a dynamic gesture category is determined after performing the kinematic constraint process on the joint point information, so that joint point detection precision is improved, which improves the gesture recognition accuracy.

In some exemplary embodiments, corresponding kinematic constraint processes are performed respectively on the joint point information of people of different ages, such as the elderly, adults, and children, so that the joint point detection precision is further improved.

In some exemplary embodiments, after the hand contour information is extracted, the G2-continuous curve corresponding to the hand contour information is generated for rendering of the hand, so that the amount of computation in the whole rendering process is greatly reduced, and the whole gesture rendering process is efficient and accurate.

In some exemplary embodiments, with the joint point information of the fingertip joint point obtained by obtaining the curvatures of the points on the contour of the fingertip based on the contour information of the fingertip, accuracy of the joint point information of the fingertip joint point is improved.

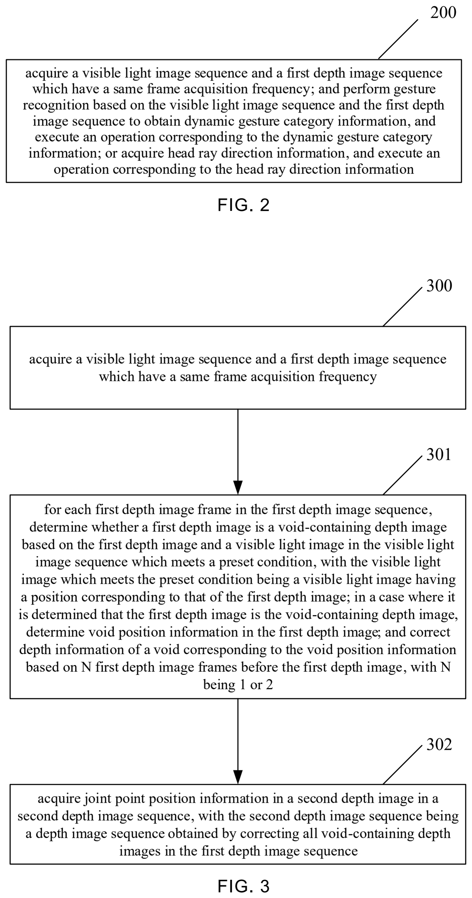

FIG. 2 is a flowchart illustrating a human-machine interaction method according to another embodiment of the present disclosure.

In a second aspect, referring to FIG. 2, another embodiment of the present disclosure provides a human-machine interaction method, including: operation 200, acquiring a visible light image sequence and a first depth image sequence which have a same frame acquisition frequency; and performing gesture recognition based on the visible light image sequence and the first depth image sequence to obtain dynamic gesture category information, and executing an operation corresponding to the dynamic gesture category information; or acquiring head ray direction information, and executing an operation corresponding to the head ray direction information.

In some exemplary embodiments, in a case where the dynamic gesture category information is obtained by performing gesture recognition based on the visible light image sequence and the first depth image sequence, the operation corresponding to the dynamic gesture category information is executed; and in a case where the dynamic gesture category information is not obtained by performing gesture recognition based on the visible light image sequence and the first depth image sequence, the head ray direction information is acquired, and the operation corresponding to the head ray direction information is executed.

In some exemplary embodiments, the gesture recognition may be performed with the aforesaid gesture recognition method, and will not be described here again.

In some exemplary embodiments, the head ray direction information may be acquired with a positioning device such as an Inertial Measurement Unit (IMU).

In some exemplary embodiments, the head ray direction information may be direction information of rays emitted from a sensor at a head.

In some exemplary embodiments, the operation corresponding to the dynamic gesture category information or the operation corresponding to the head ray direction information may be an interactive operation with an exhibit in a museum as described in Application Example 1 and Application Example 2.

In some exemplary embodiments, the operation corresponding to the dynamic gesture category information or the operation corresponding to the head ray direction information may be a tap operation, a double-tap operation, a slide operation, etc.

FIG. 3 is a flowchart illustrating a hand joint point detection method according to another embodiment of the present disclosure.

In a third aspect, referring to FIG. 3, another embodiment of the present disclosure provides a hand joint point detection method, which may include operations 300 to 302.

At operation 300, a visible light image sequence and a first depth image sequence which have a same frame acquisition frequency are acquired.

In some exemplary embodiments, the visible light image sequence may be an RGB image sequence or a grayscale image sequence.

In some example embodiments, the visible light image sequence and the first depth image sequence may be acquired from a visible light video stream and a first depth video stream which have the same frame acquisition frequency.

In some exemplary embodiments, the visible light video stream may be decoded to obtain a visible light image frame sequence, the visible light image frame sequence is placed in a first queue, and a part of the visible light image frame sequence which is placed in the first queue is the visible light image sequence to be acquired; the first depth video stream is decoded to obtain a first depth image frame sequence, the first depth image frame sequence is placed in a second queue, and a part of the first depth image frame sequence which is placed in the second queue is the first depth image sequence to be acquired; and the first queue and the second queue have a same size that is M, with M being an integer greater than or equal to 1.

In some exemplary embodiments, M is an integer greater than or equal to 8 and less than or equal to 16.

In some exemplary embodiments, the visible light image sequence in the first queue is aligned with the first depth image sequence in the second queue, that is, a visible light image and a first depth image at a same position are acquired simultaneously.

In some exemplary embodiments, visible light images in the visible light image frame sequence are subjected to first preprocessing and then placed in the first queue, and first depth images in the first depth image frame sequence are subjected to second preprocessing and then placed in the second queue.

In some exemplary embodiments, the first preprocessing may be at least one of size scaling or pixel value normalization.

In some exemplary embodiments, the second preprocessing may be at least one of size scaling or pixel value normalization.

In some exemplary embodiments, visible light images obtained by performing the first preprocessing on the visible light images in the visible light image frame sequence meet an input requirement of a hand region acquisition model.

In some exemplary embodiments, first depth images obtained by performing the second preprocessing on the first depth images in the first depth image frame sequence meet the input requirement of the hand region acquisition model.

At operation 301, for each first depth image frame in the first depth image sequence, whether a first depth image is a void-containing depth image is determined based on the first depth image and a visible light image in the visible light image sequence which meets a preset condition, with the visible light image which meets the preset condition being a visible light image having a position corresponding to that of the first depth image; in a case where it is determined that the first depth image is the void-containing depth image, void position information in the first depth image is determined; and depth information of a void corresponding to the void position information is corrected based on N first depth image frames before the first depth image, with N being 1 or 2.

In some exemplary embodiments, after the depth information of the void corresponding to the void position information is corrected based on the N first depth image frames before the first depth image, the operation of determining, for each first depth image frame in the first depth image sequence, whether a first depth image is a void-containing depth image based on the first depth image and a visible light image in the visible light image sequence which has a position corresponding to that of the first depth image is continuously performed until no void-containing depth image exists in the first depth image sequence.

In some exemplary embodiments, determining whether the first depth image is the void-containing depth image based on the first depth image and the visible light image in the visible light image sequence which has the position corresponding to that of the first depth image includes: determining a binary image of the visible light image and a binary image of the first depth image; determining a difference between the binary image of the visible light image and the binary image of the first depth image; in a case where the difference is less than a first preset threshold, determining the first depth image as a depth image capable of being used as a reference frame; and in a case where the difference is greater than the first preset threshold, determining the first depth image as the void-containing depth image.

In some exemplary embodiments, when determining the difference between the binary image of the visible light image and the binary image of the first depth image, the sum of absolute values of differences between all pixel points of the binary image of the visible light image and all pixel points of the binary image of the first depth image may be determined; or, a normalized value of the sum of the absolute values of the differences between all the pixel points of the binary image of the visible light image and all the pixel points of the binary image of the first depth image may be determined; or, an average of the absolute values of the differences between all the pixel points of the binary image of the visible light image and all the pixel points of the binary image of the first depth image may be determined; or, the difference may be obtained by a calculation with other methods.

In some exemplary embodiments, determining the void position information in the first depth image includes: determining a binary image of the first depth image; and determining position information of a pixel with a pixel value of 0 in the binary image as the void position information.

In some exemplary embodiments, correcting the depth information of the void corresponding to the void position information based on the N first depth image frames before the first depth image includes: acquiring joint point position information in the first depth image; determining whether the void corresponding to the void position information is within a preset region corresponding to a joint point corresponding to the joint point position information based on the void position information and the joint point position information; in a case where the void is within the preset region corresponding to the joint point, determining the corrected depth information of the void to be a weighted average of a basic filling value, depth information of the void corresponding to the void position information in the N first depth image frames before the first depth image, and prior information of the joint point; and in a case where the void is beyond the preset region corresponding to the joint point, determining the corrected depth information of the void based on a depth change trend between two joint points closest to the void and the depth information of the void corresponding to the void position information in the N first depth image frames before the first depth image.

In some exemplary embodiments, acquiring the joint point position information in the first depth image includes: inputting the visible light image in the visible light image sequence which has the position corresponding to that of the first depth image into the hand region acquisition model to obtain fifth hand region information in the visible light image; acquiring a fourth target sub-image corresponding to the fifth hand region information from the first depth image; and inputting the fourth target sub-image into a hand joint point detection model to obtain joint point information corresponding to the fifth hand region information.

In some exemplary embodiments, in addition to the fifth hand region information in the visible light image, at least one of palm-back-of-hand category information or crowd category information is further obtained by inputting the visible light image in the visible light image sequence which has the position corresponding to that of the first depth image into the hand region acquisition model.

In some exemplary embodiments, determining whether the void corresponding to the void position information is within the preset region corresponding to the joint point corresponding to the joint point position information based on the void position information and the joint point position information includes: calculating a distance between the void corresponding to the void position information and the joint point corresponding to the joint point position information, and determining that the void is within the preset region corresponding to the joint point in a case where the distance is less than or equal to a radius of an inscribed circle or a circumscribed circle of the preset region; and in a case where the distance is greater than the radius of the inscribed circle or the circumscribed circle of the preset region, determining that the void is beyond the preset region corresponding to the joint point.

In some exemplary embodiments, determining the corrected depth information of the void to be the weighted average of the basic filling value, the depth information of the void corresponding to the void position information in the N first depth image frames before the first depth image, and the prior information of the joint point includes: determining the corrected depth information of the void by the formula

$$D=\sum_{i=1}^{N} \lambda_{refi} D_{refi} + \lambda_{basic} D_{basic} + \sum_{j} \lambda_{avgj} D_{avgj} \quad ,$$

where D is the corrected depth information of the void, $\lambda_{refi}$ is a weight of the depth information of the void corresponding to the void position information in i first depth image images before the first depth image, $D_{refi}$ is the depth information of the void corresponding to the void position information in the i first depth image images before the first depth image, $\lambda_{basic}$ is a weight of the basic filling value, $D_{basic}$ is the basic filling value, $\lambda_{avgj}$ is a weight of $j^{th}$ prior information of the joint point, and $D_{avgj}$ is the $j^{th}$ prior information of the joint point.

In some exemplary embodiments, the basic filling value may be obtained with a linear void filling method or a morphological operation method (such as a dilation operation) using OpenCV.

In some exemplary embodiments, the prior information of the joint point includes: length prior information and angle prior information of the joint point.

In some exemplary embodiments, the length prior information of the joint point is an average of length information of a joint point closest to the void corresponding to all historical visible light images in B historical visible light image sequences and all historical depth images in B historical depth image sequences, with the B historical visible light image sequences and the B historical depth image sequences corresponding to a same dynamic gesture category, and B being an integer greater than or equal to 1.

In some exemplary embodiments, the length information of the joint point closest to the void is a ratio of length information between adjacent joint points to width information of a hand region corresponding to hand region information in the visible light image.

In some exemplary embodiments, the length information of the joint point closest to the void is a ratio of length information between adjacent joint points to length information of a hand region corresponding to hand region information in the visible light image.

In some exemplary embodiments, the angle prior information of the joint point is an average of offset angle information of a joint point closest to the void relative to a wrist joint point corresponding to all historical visible light images in B historical visible light image sequences and all historical depth images in B historical depth image sequences, with the B historical visible light image sequences and the B historical depth image sequences corresponding to a same dynamic gesture category

In some exemplary embodiments, the offset angle information of the joint point closest to the void relative to the wrist joint point refers to angle information between a straight line from the joint point closest to the void to a proximal interphalangeal joint point and a straight line from the proximal interphalangeal joint point to the wrist joint point. The joint point closest to the void and the proximal interphalangeal joint point belong to a same finger.

In some exemplary embodiments, when calculating the prior information of the joint point, the prior information of the joint point may be obtained by a calculation using the B historical visible light image sequences and B historical depth image sequences corresponding to dynamic gesture category information obtained by previous gesture recognition, or may be obtained by a calculation using B historical visible light image sequences and B historical depth image sequences corresponding to a default dynamic gesture category (e.g., a tap gesture).

In some exemplary embodiments, when calculating the prior information of the joint point, B historical visible light image sequences and B historical depth image sequences corresponding to a same dynamic gesture category of a same crowd category may be used for calculation to obtain the prior information of the joint point corresponding to the crowd category.

In some exemplary embodiments, B historical visible light image sequences and B historical depth image sequences corresponding to a same dynamic gesture category of crowd category information obtained by previous gesture recognition may be used for calculation to obtain the prior information of the joint point corresponding to the crowd category.

In some exemplary embodiments, B historical visible light image sequences and B historical depth image sequences corresponding to a same dynamic gesture category of a default crowd category (e.g., adults) may be used for calculation to obtain the prior information of the joint point corresponding to the crowd category.

In some exemplary embodiments, B historical visible light image sequences and B historical depth image sequences corresponding to dynamic gesture category information (obtained by previous gesture recognition) of crowd category information obtained by the previous gesture recognition may be used for calculation to obtain the prior information of the joint point corresponding to the crowd category.

In some exemplary embodiments, B historical visible light image sequences and B historical depth image sequences corresponding to a default dynamic gesture category of a default crowd category (e.g., adults) may be used for calculation to obtain the prior information of the joint point corresponding to the crowd category.

In some exemplary embodiments, determining the corrected depth information of the void based on the depth change trend between the two joint points closest to the void and the depth information of the void corresponding to the void position information in the N first depth image frames before the first depth image includes: performing an interpolation operation on depth information of the two joint points closest to the void in the first depth image to obtain depth information of the void corresponding to the void position information in the first depth image; and determining the corrected depth information of the void to be a weighted average of the basic filling value, the depth information of the void corresponding to the void position information in the first depth image, and the depth information of the void corresponding to the void position information in the N first depth image frames before the first depth image.

At operation 302, joint point position information in a second depth image in a second depth image sequence is acquired, with the second depth image sequence being a depth image sequence obtained by correcting all void-containing depth images in the first depth image sequence.

In some exemplary embodiments, respectively acquiring the joint point position information in each second depth image frame in the second depth image sequence includes: for each second depth image frame, inputting a visible light image in the visible light image sequence which has a position corresponding to that of a second depth image into the hand region acquisition model to obtain first hand region information in the visible light image; acquiring a first target sub-image corresponding to the first hand region information from the second depth image; and inputting the first target sub-image into the hand joint point detection model to obtain joint point information corresponding to the first hand region information, with the joint point information corresponding to the first hand region information being the joint point position information in the second depth image.

In some exemplary embodiments, a position index of the visible light image in the visible light image sequence is the same as that of the second depth image in the second depth image sequence, with the visible light image being the visible light image in the visible light image sequence which has the position corresponding to that of the second depth image.

In some exemplary embodiments, the first hand region information refers to information of an image region including a hand and a part or all of a forearm.

In some exemplary embodiments, the hand includes fingers, a palm, and a wrist.

In some exemplary embodiments, the first hand region information may be coordinate information of 4 corners of the image region.

In some exemplary embodiments, the first hand region information may be coordinate information of one of corners of the image region, and width information and length information of the image region.

In some exemplary embodiments, at least one of palm-back-of-hand category information or crowd category information is further obtained by inputting the visible light image in the visible light image sequence which has the position corresponding to that of the second depth image into the hand region acquisition model.

In some exemplary embodiments, the palm-back-of-hand category information is configured to indicate whether the hand in the image region is a palm or a back of the hand.

In some exemplary embodiments, the crowd category information is configured to indicate a crowd category to which the hand in the image region belongs, for example, the crowd category may be the elderly, adults, or children.

In some exemplary embodiments, confidence corresponding to the first hand region information is further obtained by inputting the visible light image in the visible light image sequence which has the position corresponding to that the second depth image into the hand region acquisition model; and the first hand region information with the confidence greater than a second preset threshold is selected for subsequent processing, that is, for the operation of acquiring the first target sub-image corresponding to the first hand region information from the second depth image. Here, the first hand region information with the confidence greater than the second preset threshold is considered to be valid first hand region information; and the first hand region information with the confidence less than the second preset threshold is considered to be invalid first hand region information. The valid first hand region information is screened out based on the confidence, so that a range for subsequent acquisition of the joint point information is narrowed, and subsequent gesture recognition precision is improved.

In some exemplary embodiments, the first target sub-image corresponding to the first hand region information from the second depth image refers to a position of the first target sub-image in the second depth image being the same as that of the image region corresponding to the first hand region information in the visible light image.

In some exemplary embodiments, the joint point information includes: joint point information of finger joint points, joint point information of wrist joint points, and joint point information of forearm joint points; and the finger joint points include: proximal interphalangeal joint points, middle interphalangeal joint points, distal interphalangeal joint points, and fingertip joint points.

In some exemplary embodiments, the finger joint points further include: finger web joint points.

With the hand joint point detection method provided in the embodiments of the present disclosure, the joint point position information is acquired after the depth information of the void in the depth image is corrected, so that accuracy of the joint point position information is improved.

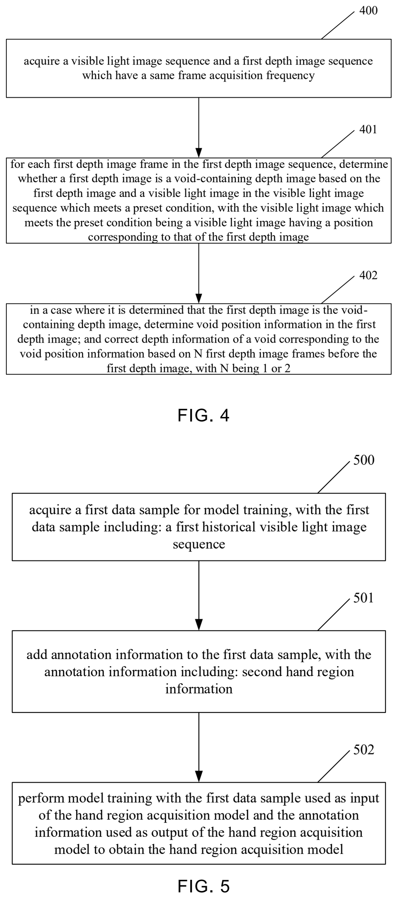

FIG. 4 is a flowchart illustrating a void correction method according to another embodiment of the present disclosure.

In a fourth aspect, referring to FIG. 4, another embodiment of the present disclosure provides a void correction method, which may include operations 400 to 402.

At operation 400, a visible light image sequence and a first depth image sequence which have a same frame acquisition frequency are acquired.

In some exemplary embodiments, the visible light image sequence may be an RGB image sequence or a grayscale image sequence.

In some example embodiments, the visible light image sequence and the first depth image sequence may be acquired from a visible light video stream and a first depth video stream which have the same frame acquisition frequency.

In some exemplary embodiments, the visible light video stream may be decoded to obtain a visible light image frame sequence, the visible light image frame sequence is placed in a first queue, and a part of the visible light image frame sequence which is placed in the first queue is the visible light image sequence to be acquired; the first depth video stream is decoded to obtain a first depth image frame sequence, the first depth image frame sequence is placed in a second queue, and a part of the first depth image frame sequence which is placed in the second queue is the first depth image sequence to be acquired; and the first queue and the second queue have a same size that is M, with M being an integer greater than or equal to 1.

In some exemplary embodiments, M is an integer greater than or equal to 8 and less than or equal to 16.

In some exemplary embodiments, the visible light image sequence in the first queue is aligned with the first depth image sequence in the second queue, that is, a visible light image and a first depth image at a same position are acquired simultaneously.

In some exemplary embodiments, visible light images in the visible light image frame sequence are subjected to first preprocessing and then placed in the first queue, and first depth images in the first depth image frame sequence are subjected to second preprocessing and then placed in the second queue.

In some exemplary embodiments, the first preprocessing may be at least one of size scaling or pixel value normalization.

In some exemplary embodiments, the second preprocessing may be at least one of size scaling or pixel value normalization.

In some exemplary embodiments, visible light images obtained by performing the first preprocessing on the visible light images in the visible light image frame sequence meet an input requirement of a hand region acquisition model.

In some exemplary embodiments, first depth images obtained by performing the second preprocessing on the first depth images in the first depth image frame sequence meet the input requirement of the hand region acquisition model.

At operation 401, for each first depth image frame in the first depth image sequence, whether a first depth image is a void-containing depth image is determined based on the first depth image and a visible light image in the visible light image sequence which meets a preset condition, with the visible light image which meets the preset condition being a visible light image having a position corresponding to that of the first depth image.

In some exemplary embodiments, after depth information of a void corresponding to void position information is corrected based on N first depth image frames before the first depth image, the operation of determining, for each first depth image frame in the first depth image sequence, whether a first depth image is a void-containing depth image based on the first depth image and a visible light image in the visible light image sequence which has a position corresponding to that of the first depth image is continuously performed until no void-containing depth image exists in the first depth image sequence.

In some exemplary embodiments, determining whether the first depth image is the void-containing depth image based on the first depth image and the visible light image in the visible light image sequence which has the position corresponding to that of the first depth image includes: determining a binary image of the visible light image and a binary image of the first depth image; determining a difference between the binary image of the visible light image and the binary image of the first depth image; in a case where the difference is less than a first preset threshold, determining the first depth image as a depth image capable of being used as a reference frame; and in a case where the difference is greater than the first preset threshold, determining the first depth image as the void-containing depth image.

In some exemplary embodiments, when determining the difference between the binary image of the visible light image and the binary image of the first depth image, the sum of absolute values of differences between all pixel points of the binary image of the visible light image and all pixel points of the binary image of the first depth image may be determined; or, a normalized value of the sum of the absolute values of the differences between all the pixel points of the binary image of the visible light image and all the pixel points of the binary image of the first depth image may be determined; or, an average of the absolute values of the differences between all the pixel points of the binary image of the visible light image and all the pixel points of the binary image of the first depth image may be determined; or, the difference may be obtained by a calculation with other methods.

At operation 402, in a case where it is determined that the first depth image is the void-containing depth image, void position information in the first depth image is determined; and depth information of a void corresponding to the void position information is corrected based on N first depth image frames before the first depth image, with N being 1 or 2.

In some exemplary embodiments, determining the void position information in the first depth image includes: determining a binary image of the first depth image; and determining position information of a pixel with a pixel value of 0 in the binary image as the void position information.

In some exemplary embodiments, correcting the depth information of the void corresponding to the void position information based on the N first depth image frames before the first depth image includes: acquiring joint point position information in the first depth image; determining whether the void corresponding to the void position information is within a preset region corresponding to a joint point corresponding to the joint point position information based on the void position information and the joint point position information; in a case where the void is within the preset region corresponding to the joint point, determining the corrected depth information of the void to be a weighted average of a basic filling value, depth information of the void corresponding to the void position information in the N first depth image frames before the first depth image, and prior information of the joint point; and in a case where the void is beyond the preset region corresponding to the joint point, determining the corrected depth information of the void based on a depth change trend between two joint points closest to the void and the depth information of the void corresponding to the void position information in the N first depth image frames before the first depth image.

In some exemplary embodiments, acquiring the joint point position information in the first depth image includes: inputting the visible light image in the visible light image sequence which has the position corresponding to that of the first depth image into the hand region acquisition model to obtain fifth hand region information in the visible light image; acquiring a fourth target sub-image corresponding to the fifth hand region information from the first depth image; and inputting the fourth target sub-image into a hand joint point detection model to obtain joint point information corresponding to the fifth hand region information.

In some exemplary embodiments, in addition to the fifth hand region information in the visible light image, at least one of palm-back-of-hand category information or crowd category information is further obtained by inputting the visible light image in the visible light image sequence which has the position corresponding to that of the first depth image into the hand region acquisition model.

In some exemplary embodiments, determining whether the void corresponding to the void position information is within the preset region corresponding to the joint point corresponding to the joint point position information based on the void position information and the joint point position information includes: calculating a distance between the void corresponding to the void position information and the joint point corresponding to the joint point position information, and determining that the void is within the preset region corresponding to the joint point in a case where the distance is less than or equal to a radius of an inscribed circle or a circumscribed circle of the preset region; and in a case where the distance is greater than the radius of the inscribed circle or the circumscribed circle of the preset region, determining that the void is beyond the preset region corresponding to the joint point.

In some exemplary embodiments, determining the corrected depth information of the void to be the weighted average of the basic filling value, the depth information of the void corresponding to the void position information in the N first depth image frames before the first depth image, and the prior information of the joint point includes: determining the corrected depth information of the void by the formula

$$D = \sum_{i=1}^{N} \lambda_{\mathrm{refi}} D_{\mathrm{refi}} + \lambda_{\mathrm{basic}} D_{\mathrm{basic}} + \sum_{j} \lambda_{\mathrm{avgj}} D_{\mathrm{avgj}} \quad ,$$

where D is the corrected depth information of the void, $\lambda_{\mathrm{refi}}$ is a weight of the depth information of the void corresponding to the void position information in i first depth image images before the first depth image, $D_{\mathrm{refi}}$ is the depth information of the void corresponding to the void position information in the i first depth image images before the first depth image, $\lambda_{\mathrm{basic}}$ is a weight of the basic filling value, $D_{\mathrm{basic}}$ is the basic filling value, $\lambda_{\mathrm{avgj}}$ is a weight of jth prior information of the joint point, and $D_{\mathrm{avgj}}$ is the jth prior information of the joint point.

In some exemplary embodiments, the basic filling value may be obtained with a linear void filling method or a morphological operation method (such as a dilation operation) using OpenCV.

In some exemplary embodiments, the prior information of the joint point includes: length prior information and angle prior information of the joint point.

In some exemplary embodiments, the length prior information of the joint point is an average of length information of a joint point closest to the void corresponding to all historical visible light images in B historical visible light image sequences and all historical depth images in B historical depth image sequences, with the B historical visible light image sequences and the B historical depth image sequences corresponding to a same dynamic gesture category, and B being an integer greater than or equal to 1.

In some exemplary embodiments, the length information of the joint point closest to the void is a ratio of length information between adjacent joint points to width information of a hand region corresponding to hand region information in the visible light image.

In some exemplary embodiments, the length information of the joint point closest to the void is a ratio of length information between adjacent joint points to length information of a hand region corresponding to hand region information in the visible light image.

In some exemplary embodiments, the angle prior information of the joint point is an average of offset angle information of a joint point closest to the void relative to a wrist joint point corresponding to all historical visible light images in B historical visible light image sequences and all historical depth images in B historical depth image sequences, with the B historical visible light image sequences and the B historical depth image sequences corresponding to a same dynamic gesture category

In some exemplary embodiments, the offset angle information of the joint point closest to the void relative to the wrist joint point refers to angle information between a straight line from the joint point closest to the void to a proximal interphalangeal joint point and a straight line from the proximal interphalangeal joint point to the wrist joint point. The joint point closest to the void and the proximal interphalangeal joint point belong to a same finger.

In some exemplary embodiments, when calculating the prior information of the joint point, the prior information of the joint point may be obtained by a calculation using the B historical visible light image sequences and B historical depth image sequences corresponding to dynamic gesture category information obtained by previous gesture recognition, or may be obtained by a calculation using B historical visible light image sequences and B historical depth image sequences corresponding to a default dynamic gesture category (e.g., a tap gesture).

In some exemplary embodiments, when calculating the prior information of the joint point, B historical visible light image sequences and B historical depth image sequences corresponding to a same dynamic gesture category of a same crowd category may be used for calculation to obtain the prior information of the joint point corresponding to the crowd category.

In some exemplary embodiments, B historical visible light image sequences and B historical depth image sequences corresponding to a same dynamic gesture category of crowd category information obtained by previous gesture recognition may be used for calculation to obtain the prior information of the joint point corresponding to the crowd category.

In some exemplary embodiments, B historical visible light image sequences and B historical depth image sequences corresponding to a same dynamic gesture category of a default crowd category (e.g., adults) may be used for calculation to obtain the prior information of the joint point corresponding to the crowd category.

In some exemplary embodiments, B historical visible light image sequences and B historical depth image sequences corresponding to dynamic gesture category information (obtained by previous gesture recognition) of crowd category information obtained by the previous gesture recognition may be used for calculation to obtain the prior information of the joint point corresponding to the crowd category.

In some exemplary embodiments, B historical visible light image sequences and B historical depth image sequences corresponding to a default dynamic gesture category of a default crowd category (e.g., adults) may be used for calculation to obtain the prior information of the joint point corresponding to the crowd category.

In some exemplary embodiments, determining the corrected depth information of the void based on the depth change trend between the two joint points closest to the void and the depth information of the void corresponding to the void position information in the N first depth image frames before the first depth image includes: performing an interpolation operation on depth information of the two joint points closest to the void in the first depth image to obtain depth information of the void corresponding to the void position information in the first depth image; and determining the corrected depth information of the void to be a weighted average of the basic filling value, the depth information of the void corresponding to the void position information in the first depth image, and the depth information of the void corresponding to the void position information in the N first depth image frames before the first depth image.

With the method, the depth information of the void in the depth image is corrected, and accuracy of the depth information of the void is improved, which lays the foundation for subsequent extraction of the joint point position information and gesture recognition.

FIG. 5 is a flowchart illustrating a training method for a hand region acquisition model according to another embodiment of the present disclosure.

In a fifth aspect, referring to FIG. 5, another embodiment of the present disclosure provides a training method for a hand region acquisition model, which includes operations 500 to 502.

At operation 500, a first data sample for model training is acquired, with the first data sample including: a first historical visible light image sequence.

In some exemplary embodiments, the first historical visible light image sequence may be a first historical RGB image sequence or a first historical grayscale image sequence.

In some example embodiments, the first historical visible light image sequence may be acquired from a first historical visible light video stream.

In some exemplary embodiments, the first historical visible light video stream may be decoded to obtain a first historical visible light image frame sequence, and the first historical visible light image sequence is acquired from the first historical visible light image frame sequence.

In some exemplary embodiments, after first historical visible light images in the first historical visible light image frame sequence are subjected to first preprocessing, the first historical visible light image sequence is acquired from the first historical visible light image frame sequence subjected to the first preprocessing.

In some exemplary embodiments, the first preprocessing may be at least one of size scaling or pixel value normalization.

In some exemplary embodiments, first historical visible light images obtained by performing the first preprocessing on the first historical visible light images in the first historical visible light image frame sequence meet an input requirement of the hand region acquisition model.

At operation 501, annotation information is added to the first data sample, with the annotation information including: second hand region information.

In some exemplary embodiments, the second hand region information refers to information of a first image region including a hand and a part or all of a forearm in the first historical visible light images in the first historical visible light image sequence, and the image region is a hand region.

In some exemplary embodiments, the hand includes fingers, a palm, and a wrist.

In some exemplary embodiments, the second hand region information may be coordinate information of 4 corners of the first image region.

In some exemplary embodiments, the second hand region information may be coordinate information of one of corners of the first image region, and width information and length information of the image region.

In some exemplary embodiments, the annotation information may further include: at least one of palm-back-of-hand category information or crowd category information.

In some exemplary embodiments, the palm-back-of-hand category information is configured to indicate whether the hand in the image region is a palm or a back of the hand.

In some exemplary embodiments, the crowd category information is configured to indicate a crowd category to which the hand in the image region belongs, for example, the crowd category may be the elderly, adults, or children.

In some exemplary embodiments, when adding the annotation information to the first data sample, the second hand region information may be obtained by detecting the first image region from the first data sample with an object detection method, or the annotation information may be manually added.

At operation 502, model training is performed with the first data sample used as input of the hand region acquisition model and the annotation information used as output of the hand region acquisition model to obtain the hand region acquisition model.

In some exemplary embodiments, after adding the annotation information to the first data sample and before performing model training, the method further includes: performing a cross cleaning process on the annotation information.

Performing model training with the first data sample used as the input of the hand region acquisition model and the annotation information used as the output of the hand region acquisition model to obtain the hand region acquisition model includes: performing model training with the first data sample used as the input of the hand region acquisition model and the annotation information subjected to the cross cleaning process used as the output of the hand region acquisition model to obtain the hand region acquisition model.

In some exemplary embodiments, when adding the annotation information to the first data sample, a plurality of persons may add corresponding annotation information to the same first data sample, and a cross cleaning process is performed on the annotation information added to the same first data sample by the different persons to obtain the final annotation information of the first data sample.

In some exemplary embodiments, the first data sample for model training is acquired, data enhancement may be performed on the first data sample, and the annotation information is added to the first data sample subjected to data enhancement; and model training is performed with the first data sample subjected to data enhancement used the input of the hand region acquisition model and the annotation information used as the output of the hand region acquisition model to obtain the hand region acquisition model. Generalization of the hand region acquisition model is improved by data enhancement.

In some exemplary embodiments, a quantification operation may be performed on model parameters in the hand region acquisition model obtained by training, so as to increase a speed of subsequently acquiring first hand region information based on the hand region acquisition model.

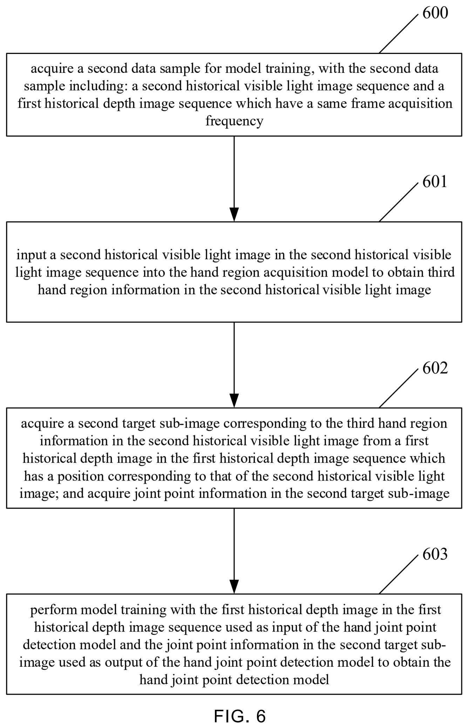

FIG. 6 is a flowchart illustrating a training method for a hand joint point detection model according to another embodiment of the present disclosure.

In a sixth aspect, referring to FIG. 6, another embodiment of the present disclosure provides a training method for a hand joint point detection model, which may include operations 600 to 603.

At operation 600, a second data sample for model training is acquired, with the second data sample including: a second historical visible light image sequence and a first historical depth image sequence which have a same frame acquisition frequency.

In some exemplary embodiments, the second historical visible light image sequence may be a second historical RGB image sequence or a second historical grayscale image sequence.

In some example embodiments, the second historical visible light image sequence and the first historical depth image sequence may be acquired from a second historical visible light video stream and a first historical depth video stream which have the same frame acquisition frequency.

In some exemplary embodiments, the second historical visible light video stream may be decoded to obtain a second historical visible light image frame sequence, and the second historical visible light image sequence is acquired from the second historical visible light image frame sequence; the first historical depth video stream is decoded to obtain a first historical depth image frame sequence, and the first historical depth image sequence is acquired from the first historical depth image frame sequence; and the second historical visible light image sequence and the first historical depth image sequence have a same size that is M, with M being an integer greater than or equal to 1.

In some exemplary embodiments, M is an integer greater than or equal to 8 and less than or equal to 16.

In some exemplary embodiments, the second historical visible light image sequence is aligned with the first historical depth image sequence, that is, a second historical visible light image and a first historical depth image at a same position are acquired simultaneously.

In some exemplary embodiments, second historical visible light images in the second historical visible light image frame sequence are subjected to first preprocessing and then subjected to subsequent processing, and first historical depth images in the first historical depth image frame sequence are subjected to second preprocessing and then subjected to subsequent processing.

In some exemplary embodiments, the first preprocessing may be at least one of size scaling or pixel value normalization.

In some exemplary embodiments, the second preprocessing may be at least one of size scaling or pixel value normalization.

In some exemplary embodiments, second historical visible light images obtained by performing the first preprocessing on the second historical visible light images in the second historical visible light image frame sequence meet an input requirement of a hand region acquisition model.

In some exemplary embodiments, first historical depth images obtained by performing the second preprocessing on the first historical depth images in the first historical depth image frame sequence meet the input requirement of the hand region acquisition model.

At operation 601, a second historical visible light image in the second historical visible light image sequence is input into the hand region acquisition model to obtain third hand region information in the second historical visible light image.

At operation 602, a second target sub-image corresponding to the third hand region information in the second historical visible light image is acquired from a first historical depth image in the first historical depth image sequence which has a position corresponding to that of the second historical visible light image; and joint point information in the second target sub-image is acquired.

In some exemplary embodiments, a position index of the first historical depth image in the first historical depth image sequence is the same as that of the second historical visible light image in the second historical visible light image sequence, with the first historical depth image being the first historical depth image in the first historical depth image sequence which has the position corresponding to that of the second historical visible light image.

In some exemplary embodiments, in the first historical depth image in the first historical depth image sequence which has the position corresponding to that of the second historical visible light image, the second target sub-image corresponding to the third hand region information in the second historical visible light image refers to a position of the second target sub-image in the first historical depth image in the first historical depth image sequence which has the position corresponding to that of the second historical visible light image being the same as a position of an image region corresponding to the third hand region information in the second historical visible light image.

In some exemplary embodiments, the joint point information includes: joint point information of finger joint points, joint point information of wrist joint points, and joint point information of forearm joint points; and the finger joint points include: proximal interphalangeal joint points, middle interphalangeal joint points, distal interphalangeal joint points, and fingertip joint points.

In some exemplary embodiments, the finger joint points further include: finger web joint points.

In some exemplary embodiments, the joint point information in the second target sub-image which is acquired with other methods in the related technology may be adopted when performing model training for the first time. From the second time of model training, the joint point information in the second target sub-image may be obtained based on the hand joint detection model obtained by previous training.

At operation 603, model training is performed with the first historical depth image in the first historical depth image sequence used as input of the hand joint point detection model and the joint point information in the second target sub-image used as output of the hand joint point detection model to obtain the hand joint point detection model.

In some exemplary embodiments, before performing model training or before acquiring the joint point information in the second target sub-image, the method further includes: for each first historical depth image frame in the first historical depth image sequence, determining whether a first historical depth image is a void-containing historical depth image based on the first historical depth image and a second historical visible light image in the second historical visible light image sequence which has a position corresponding to that of the first historical depth image; in a case where it is determined that the first historical depth image is the void-containing historical depth image, determining void position information in the first historical depth image; and correcting depth information of a void corresponding to the void position information based on N first historical depth image frames before the first historical depth image, with N being 1 or 2.

Model training is performed with the void-corrected first historical depth image used as the input of the hand joint point detection model and the joint point information in the second target sub-image used as the output of the hand joint point detection model to obtain the hand joint point detection model.

In some exemplary embodiments, determining whether the first historical depth image is the void-containing historical depth image based on the first historical depth image and the second historical visible light image in the second historical visible light image sequence which has the position corresponding to that of the first historical depth image includes: determining a binary image of the second historical visible light image and a binary image of the first historical depth image; determining a difference between the binary image of the second historical visible light image and the binary image of the first historical depth image; in a case where the difference is less than a first preset threshold, determining the first historical depth image as a historical depth image capable of being used as a reference frame; and in a case where the difference is greater than the first preset threshold, determining the first historical depth image as the void-containing historical depth image.

In some exemplary embodiments, when determining the difference between the binary image of the second historical visible light image and the binary image of the first historical depth image, the sum of absolute values of differences between all pixel points of the binary image of the second historical visible light image and all pixel points of the binary image of the first historical depth image may be determined; or, a normalized value of the sum of the absolute values of the differences between all the pixel points of the binary image of the second historical visible light image and all the pixel points of the binary image of the first historical depth image may be determined; or, an average of the absolute values of the differences between all the pixel points of the binary image of the second historical visible light image and all the pixel points of the binary image of the first historical depth image may be determined; or, the difference may be obtained by a calculation with other methods.

In some exemplary embodiments, determining the void position information in the first historical depth image includes: determining a binary image of the first historical depth image; and determining position information of a pixel with a pixel value of 0 in the binary image as the void position information.

In some exemplary embodiments, correcting the depth information of the void corresponding to the void position information based on the N first historical depth image frames before the first historical depth image includes: acquiring joint point position information in the first historical depth image; determining whether the void corresponding to the void position information is within a preset region corresponding to a joint point corresponding to the joint point position information based on the void position information and the joint point position information; in a case where the void is within the preset region corresponding to the joint point, determining the corrected depth information of the void to be a weighted average of a basic filling value, depth information of the void corresponding to the void position information in the N first historical depth image frames before the first historical depth image, and prior information of the joint point; and in a case where the void is beyond the preset region corresponding to the joint point, determining the corrected depth information of the void based on a depth change trend of two joint points closest to the void and the depth information of the void corresponding to the void position information in the N first historical depth image frames before the first historical depth image.

In some exemplary embodiments, the second data sample for model training is acquired, data enhancement may be performed on the second data sample, and model training is performed based on the second data sample subjected to data enhancement to obtain the hand joint point detection model. Generalization of the hand joint point detection model is improved by data enhancement.

In some exemplary embodiments, a quantification operation may be performed on model parameters in the hand joint point detection model obtained by training, so as to increase a speed of subsequently acquiring joint point information based on the hand joint point detection model.

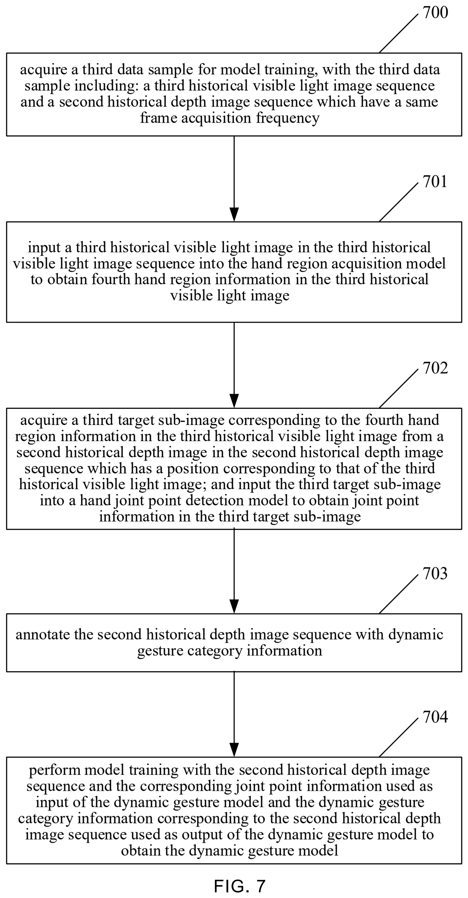

FIG. 7 is a flowchart illustrating a training method for a dynamic gesture model according to another embodiment of the present disclosure.

In a seventh aspect, referring to FIG. 7, another embodiment of the present disclosure provides a training method for a dynamic gesture model, including operations 700 to 704.

At operation 700, a third data sample for model training is acquired, with the third data sample including: a third historical visible light image sequence and a second historical depth image sequence which have a same frame acquisition frequency.

In some exemplary embodiments, the third historical visible light image sequence may be a third historical RGB image sequence or a third historical grayscale image sequence.

In some example embodiments, the third historical visible light image sequence and the second historical depth image sequence may be acquired from a third historical visible light video stream and a second historical depth video stream which have the same frame acquisition frequency.

In some exemplary embodiments, the third historical visible light video stream may be decoded to obtain a third historical visible light image frame sequence, and the third historical visible light image sequence is acquired from the third historical visible light image frame sequence; the second historical depth video stream is decoded to obtain a second historical depth image frame sequence, and the second historical depth image sequence is acquired from the second historical depth image frame sequence; and the third historical visible light image sequence and the second historical depth image sequence have a same size that is M, with M being an integer greater than or equal to 1.

In some exemplary embodiments, M is an integer greater than or equal to 8 and less than or equal to 16.

In some exemplary embodiments, the third historical visible light image sequence is aligned with the second historical depth image sequence, that is, a third historical visible light image and a second historical depth image at a same position are acquired simultaneously.

In some exemplary embodiments, third historical visible light images in the third historical visible light image frame sequence are subjected to first preprocessing and then subjected to subsequent processing, and second historical depth images in the second historical depth image frame sequence are subjected to second preprocessing and then subjected to subsequent processing.

In some exemplary embodiments, the first preprocessing may be at least one of size scaling or pixel value normalization.

In some exemplary embodiments, the second preprocessing may be at least one of size scaling or pixel value normalization.

In some exemplary embodiments, third historical visible light images obtained by performing the first preprocessing on the third historical visible light images in the third historical visible light image frame sequence meet an input requirement of a hand region acquisition model.

In some exemplary embodiments, second historical depth images obtained by performing the second preprocessing on the second historical depth images in the second historical depth image frame sequence meet the input requirement of the hand region acquisition model.

At operation 701, a third historical visible light image in the third historical visible light image sequence is input into the hand region acquisition model to obtain fourth hand region information in the third historical visible light image.

At operation 702, a third target sub-image corresponding to the fourth hand region information in the third historical visible light image is acquired from a second historical depth image in the second historical depth image sequence which has a position corresponding to that of the third historical visible light image; and the third target sub-image is input into a hand joint point detection model to obtain joint point information in the third target sub-image.

In some exemplary embodiments, a position index of the second historical depth image in the second historical depth image sequence is the same as that of the third historical visible light image in the third historical visible light image sequence, with the second historical depth image being the second historical depth image in the second historical depth image sequence which has the position corresponding to that of the third historical visible light image.

In some exemplary embodiments, in the second historical depth image in the second historical depth image sequence which has the position corresponding to that of the third historical visible light image, the third target sub-image corresponding to the fourth hand region information in the third historical visible light image refers to a position of the third target sub-image in the second historical depth image in the second historical depth image sequence which has the position corresponding to that of the third historical visible light image being the same as a position of an image region corresponding to the fourth hand region information in the third historical visible light image.

In some exemplary embodiments, the joint point information includes: joint point information of finger joint points, joint point information of wrist joint points, and joint point information of forearm joint points; and the finger joint points include: proximal interphalangeal joint points, middle interphalangeal joint points, distal interphalangeal joint points, and fingertip joint points.

In some exemplary embodiments, the finger joint points further include: finger web joint points.

At operation 703, the second historical depth image sequence is annotated with dynamic gesture category information.

In some exemplary embodiments, gesture category information may be at least one of finger forward taping, finger pinching, rotating, scaling, moving, or static gestures.

At operation 704, model training is performed with the second historical depth image sequence and the corresponding joint point information used as input of the dynamic gesture model and the dynamic gesture category information corresponding to the second historical depth image sequence used as output of the dynamic gesture model to obtain the dynamic gesture model.

In some exemplary embodiments, after inputting the third target sub-image into the hand joint detection model to obtain the joint point information in the third target sub-image and before performing model training, the method further includes: drawing a joint point corresponding to the joint point information in the second historical depth image on the third historical visible light image having the position corresponding to that of the second historical depth image, and in a case where the number of the third historical visible light images in the third historical visible light image sequence which have joint point abnormality is greater than half of the number of the third historical visible light images in the third historical visible light image sequence, deleting the third data sample from model training data samples; in a case where the number of the third historical visible light images in the third historical visible light image sequence which have joint point abnormality is less than half of the number of the third historical visible light images in the third historical visible light image sequence, for each second historical depth image frame in the second historical depth image sequence, determining whether a second historical depth image is a void-containing historical depth image based on the second historical depth image and a third historical visible light image in the third historical visible light image sequence which has a position corresponding to that of the second historical depth image; in a case where it is determined that the second historical depth image is the void-containing historical depth image, determining void position information in the second historical depth image; correcting depth information of a void corresponding to the void position information based on N second historical depth image frames before the second historical depth image, with N being 1 or 2.

Acquiring the third target sub-image corresponding to the fourth hand region information in the third historical visible light image from the second historical depth image in the second historical depth image sequence which has the position corresponding to that of the third historical visible light image includes: acquiring the third target sub-image corresponding to the fourth hand region information in the third historical visible light image from the void-corrected second historical depth image in the void-corrected second historical depth image sequence which has the position corresponding to that of the third historical visible light image.

In some exemplary embodiments, in a case where the number of joint points in the third historical visible light images which correspond to the joint point drawn on the third historical visible light image and have positions corresponding to a position of the joint point drawn on the third historical visible light image is greater than or equal to a fourth preset threshold, it is determined that the joint point in the third historical visible light image is normal; and in a case where the number of the joint points in the third historical visible light images which correspond to the joint point drawn on the third historical visible light image and have the positions corresponding to the position of the joint point drawn on the third historical visible light image is less than the fourth preset threshold, it is determined that the joint point in the third historical visible light image is abnormal.

In some exemplary embodiments, before acquiring the third target sub-image corresponding to the fourth hand region information in the third historical visible light image from the second historical depth image in the second historical depth image sequence which has the position corresponding to that of the third historical visible light image, the method further includes: for each second historical depth image frame in the second historical depth image sequence, determining whether a second historical depth image is a void-containing historical depth image based on the second historical depth image and a third historical visible light image in the third historical visible light image sequence which has a position corresponding to that of the second historical depth image; in a case where it is determined that the second historical depth image is the void-containing historical depth image, determining void position information in the second historical depth image; correcting depth information of a void corresponding to the void position information based on N second historical depth image frames before the second historical depth image, with N being 1 or 2.

Acquiring the third target sub-image corresponding to the fourth hand region information in the third historical visible light image from the second historical depth image in the second historical depth image sequence which has the position corresponding to that of the third historical visible light image includes: acquiring the third target sub-image corresponding to the fourth hand region information in the third historical visible light image from the void-corrected second historical depth image in the void-corrected second historical depth image sequence which has the position corresponding to that of the third historical visible light image.

In some exemplary embodiments, determining whether the second historical depth image is the void-containing historical depth image based on the second historical depth image and the third historical visible light image in the third historical visible light image sequence which has the position corresponding to that of the second historical depth image includes: determining a binary image of the third historical visible light image and a binary image of the second historical depth image; determining a difference between the binary image of the third historical visible light image and the binary image of the second historical depth image; in a case where the difference is less than a first preset threshold, determining the second historical depth image as a historical depth image capable of being used as a reference frame; and in a case where the difference is greater than the first preset threshold, determining the second historical depth image as the void-containing historical depth image.

In some exemplary embodiments, when determining the difference between the binary image of the third historical visible light image and the binary image of the second historical depth image, the sum of absolute values of differences between all pixel points of the binary image of the third historical visible light image and all pixel points of the binary image of the second historical depth image may be determined; or, a normalized value of the sum of the absolute values of the differences between all the pixel points of the binary image of the third historical visible light image and all the pixel points of the binary image of the second historical depth image may be determined; or, an average of the absolute values of the differences between all the pixel points of the binary image of the third historical visible light image and all the pixel points of the binary image of the second historical depth image may be determined; or, the difference may be obtained by a calculation with other methods.

In some exemplary embodiments, determining the void position information in the second historical depth image includes: determining a binary image of the second historical depth image; and determining position information of a pixel with a pixel value of 0 in the binary image as the void position information.

In some exemplary embodiments, correcting the depth information of the void corresponding to the void position information based on the N second historical depth image frames before the second historical depth image includes: acquiring joint point position information in the second historical depth image; determining whether the void corresponding to the void position information is within a preset region corresponding to a joint point corresponding to the joint point position information based on the void position information and the joint point position information; in a case where the void is within the preset region corresponding to the joint point, determining the corrected depth information of the void to be a weighted average of a basic filling value, depth information of the void corresponding to the void position information in the N second historical depth image frames before the second historical depth image, and prior information of the joint point; and in a case where the void is beyond the preset region corresponding to the joint point, determining the corrected depth information of the void based on a depth change trend of two joint points closest to the void and the depth information of the void corresponding to the void position information in the N second historical depth image frames before the second historical depth image.

In some exemplary embodiments, the third data sample for model training is acquired, data enhancement may be performed on the third data sample, and model training is performed based on the third data sample subjected to data enhancement to obtain the dynamic gesture model. Generalization of the dynamic gesture model is improved by data enhancement.

In some exemplary embodiments, a quantification operation may be performed on model parameters in the dynamic gesture model obtained by training, so as to increase a speed of subsequently acquiring joint point information based on dynamic gesture model.

Two application examples are listed below to illustrate the application of the gesture recognition method provided in the embodiments of the present disclosure, and the listed application examples are not intended to limit the scope of the embodiments of the present disclosure.

Application Example 1

In the present application example, a product which performs gesture recognition with the gesture recognition method provided in the embodiments of the present disclosure is worn, one or more exhibits in a user view are captured by a camera, and one exhibit is selected to be introduced by a tap gesture or through head rays. Two modes, i.e., a gesture mode and a head action mode, are used for interaction with the virtual object. A general user view display process is as follows.

A main process adopting the tap gesture is as follows: exhibit images are captured by the camera and are rendered, the exhibit to be viewed is tapped by the tap gesture, and voice information and 3D rendering information of the exhibit are retrieved from an exhibit database based on an ID or features of the exhibit.

A main process adopting the head rays is as follows: exhibit images are captured by the camera and are rendered, the exhibit to be viewed is tapped through the head rays lasting for 2 seconds to 3 seconds, and voice information and 3D rendering information of the exhibit are retrieved from an exhibit database based on an ID or features of the exhibit.

After the voice information and the 3D rendering information are obtained, the voice information of the exhibit may be automatically played, and the 3D rendering information of the exhibit is displayed at the same time. The 3D rendering information may be the exhibit itself, in which case the user may lift his hand to manipulate the 3D rendered exhibit, such as tapping the exhibit or pinching the 3D rendered exhibit to rotate the 3D rendered exhibit up, down, left, and right, and the user may check information about interior, exterior, front, and back of the exhibit in a device. The 3D rendering information may be a video of the exhibit which introduces main characteristics, a development process, and an excavation process of the exhibit, in which case the user may lift his hand to control the playing progress of the video.

When interacting with the exhibit or operating page information by a gesture, rendering information of the hand of the user is also displayed in the user view, so as to improve user experience, and enable accurate control of fine position information.

An exemplary internal process flow is as follows.

When an electronic device provided in the embodiments of the present disclosure is started up, an inference initialization process is performed, and the hand region acquisition model, the hand joint point detection model, and the dynamic gesture model are loaded.

After the startup is completed, the camera starts to collect video data streams, and the video data streams are decoded and placed in an RGB video queue and a depth image queue, respectively. The video streams are subjected to basic image preprocessing, then detection with the hand region acquisition model is performed based on RGB images, and after hand region information is obtained, a void correction process is performed on depth images. If most of the depth images have voids, the whole video sequence in the queue is discarded. After the voids of the depth images are corrected, a hand joint point sequence is obtained with the hand joint point detection model. Meanwhile, fine position information of fingertips is obtained based on the RGB images, and is updated in the joint point sequence, joint points are constrained through human kinematics constraining to obtain a constrained joint point sequence, and detection with the dynamic gesture model is performed to obtain dynamic gesture category information.

At this time, if the user taps the exhibit in the user view, the dynamic gesture category information obtained with the dynamic gesture model is tap category information. After an application layer acquires the dynamic gesture category information, the exhibit is accordingly enlarged, and the voice or video information related to the exhibit starts to be played.

Meanwhile, at a bottom layer, the video sequence in the queue is processed from the beginning of the video sequence, and a new video stream is acquired and added to a tail of the queue.

Application example 2

When appreciating calligraphy and painting by wearing a product designed according to the embodiments of the present disclosure, voice information and 3D rendering information of a piece of calligraphy and painting may be obtained by a tap gesture or through head rays. At this time, the voice information and the 3D rendered video information are automatically played. A self-experience activity may also be performed.

A main process of the self-experience activity is as follows: practicing calligraphy and painting together with a master may be performed based on the 3D rendered video. A fingertip of a hand performing a gesture is used as a pen, and a high requirement is proposed on position. By tracking a gesture, the pressure and rhythm of calligraphy or painting are determined in real time based on a depth of the gesture.

An exemplary internal process flow is as follows.

Almost the same as the Application Example 1, a tap gesture by the user is recognized, an application layer is in an application of calligraphy and painting and is in an experience state, the tap gesture by the user lasts for several seconds, and changes in a trajectory of the gesture is tracked to obtain a stroke of calligraphy and painting. When the user lifts the pen from the scroll, that is, when a depth value of the gesture decreases, it is indicated that the stroke is completed. If the user desires to continue to practice calligraphy and painting, the user presses the pen down on the scroll again, the depth value of the gesture increases, the same gesture lasts for several seconds, and changes in a trajectory of the gesture is tracked, thereby obtaining another stroke.

By using the dynamic gesture in the above way, the experiencer can be immersed and have good experience.

In an eighth aspect, referring to FIG. 8, another embodiment of the present disclosure provides an electronic device, including: at least one processor 801; a storage device 802 having stored therein at least one program which, when executed by the at least one processor 801, implements the above gesture recognition method, the above human-machine interaction method, the above hand joint detection method, or the above void correction method.

In some example embodiments, the electronic device may be, but is not limited to, any one or more of Augmented Reality (AR)/Extended Reality (XR) glasses, a smart helmet, and a smart watch.

In some exemplary embodiments, the electronic device further includes: a video input module 803, which is configured to acquire a visible light video stream and a first depth video stream which have a same frame acquisition frequency.

In some exemplary embodiments, the video input module 803 may be a camera.

In some exemplary embodiments, the electronic device further includes: a voice output module 804, which is configured to output voice information.

In some example embodiments, the voice output module 804 may be a speaker.

In some exemplary embodiments, the electronic device further includes: a voice input module 805, which is configured to collect voice information.

In some exemplary embodiments, the voice input module 805 may be a microphone.

In some exemplary embodiments, the electronic device further includes: one or more input/output (I/O) interfaces 806 that are connected between the processor 801 and the storage device 802 and configured to enable information interaction between the processor 801 and the storage device 802.

The processor 801 is a device having a data processing capability, and includes, but is not limited to, a Central Processing Unit (CPU); the storage device 802 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 806 is connected between the processor 801 and the storage device 802, is capable of enabling the information interaction between the processor 801 and the storage device 802, and includes, but is not limited to, a data bus (Bus).

In some exemplary embodiments, the processor 801, the storage device 802, and the I/O interface 806 are connected to each other through a bus 807, and then are connected to other components of a computing device.

In a ninth aspect, another embodiment of the present disclosure provides a computer-readable medium having stored therein a computer program which, when executed by a processor, implements the above gesture recognition method, the above human-machine interaction method, the above hand joint detection method, or the above void correction method.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. **In** addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

**Claims**

1. A void correction method, comprising:

   acquiring a visible light image sequence and a first depth image sequence which have a same frame acquisition frequency;
   for each first depth image frame in the first depth image sequence, determining whether a first depth image is a void-containing depth image based on the first depth image and a visible light image in the visible light image sequence which meets a preset condition; wherein the visible light image which meets the preset condition is a visible light image having a position corresponding to a position of the first depth image; and
   in a case where it is determined that the first depth image is the void-containing depth image, determining void position information in the first depth image, and correcting depth information of a void corresponding to the void position information based on N first depth image frames before the first depth image; wherein N is 1 or 2.

2. The void correction method of claim 1, wherein after correcting the depth information of the void corresponding to the void position information based on the N first depth image frames before the first depth image, the method further comprises:
   respectively acquiring joint point position information in each second depth image frame in a second depth image sequence; wherein the second depth image sequence is a depth image sequence obtained by correcting all void-containing depth images in the first depth image sequence.

3. The void correction method of claim 2, wherein respectively acquiring the joint point position information in each second depth image frame in the second depth image sequence comprises:

   for each second depth image frame, inputting a visible light image in the visible light image sequence which has a position corresponding to a position of a second depth image into a hand region acquisition model to obtain first hand region information in the visible light image;

acquiring a first target sub-image corresponding to the first hand region information from the second depth image; and

inputting the first target sub-image into a hand joint point detection model to obtain joint point information corresponding to the first hand region information, with the joint point information corresponding to the first hand region information being the joint point position information in the second depth image.

**4.** The void correction method of claim 2, wherein after respectively acquiring the joint point position information in each second depth image frame in the second depth image sequence, the method further comprises:

determining dynamic gesture category information based on the second depth image sequence and joint point information in the second depth image.

**5.** The void correction method of claim 4, wherein the joint point information comprises:

joint point information of finger joint points, joint point information of wrist joint points, and joint point information of forearm joint points;

wherein the finger joint points comprise: proximal interphalangeal joint points, middle interphalangeal joint points, distal interphalangeal joint points, and fingertip joint points.

**6.** The void correction method of claim 5, wherein determining the dynamic gesture category information based on the second depth image sequence and the joint point information in the second depth image comprises:

for each second depth image frame, correcting joint point information of a fingertip joint point in the joint point information in the second depth image; and

inputting the second depth image sequence and the corrected joint point information in the second depth image into a dynamic gesture model to obtain the dynamic gesture category information.

**7.** The void correction method of claim 6, wherein correcting the joint point information of the fingertip joint point in the joint point information in the second depth image comprises:

acquiring a fingertip sub-image from a visible light image in the visible light image sequence which has a position corresponding to a position of the second depth image based on the joint point information of the fingertip joint point;

extracting contour information of a fingertip from the fingertip sub-image; and

calculating curvatures of points on a contour of the fingertip based on the contour information of the fingertip, and taking position information of a convex point with a maximum curvature value as the corrected joint point information of the fingertip joint point.

**8.** The void correction method of claim 4, wherein determining the dynamic gesture category information based on the second depth image sequence and the joint point information in the second depth image comprises:

for each second depth image frame in the second depth image sequence, performing a kinematic constraint process on the joint point information in the second depth image; and

inputting the second depth image sequence and the joint point information in the second depth image which is subjected to the kinematic constraint process into a dynamic gesture model to obtain the dynamic gesture category information.

**9.** The void correction method of claim 8, wherein performing the kinematic constraint process on the joint point information in the second depth image comprises at least one of:

based on a value range of a first ratio of a length between two adjacent joint points to a corresponding hand region and first ratios of N second depth image frames before the second depth image, correcting joint point information of the two adjacent joint points;

based on a value range of offset angles of joint points other than a wrist joint point relative to the wrist joint point and offset angles in the N second depth image frames before the second depth image, correcting joint point information of the joint points;

based on a value range of a finger length and finger lengths in the N second depth image frames before the second depth image, correcting joint point information of a fingertip joint point and a wrist joint point; wherein the finger length is a straight-line distance between the fingertip joint point and the wrist joint point;

based on angle information of a forearm joint point and a hand and angle information in the N second depth image frames before the second depth image, correcting joint point information of a wrist joint point and a proximal interphalangeal joint point; wherein the angle information of the forearm joint point and the hand is angle information of an angle between a straight line determined by the forearm joint point and the wrist joint point and a straight line determined by the wrist joint point and the proximal interphalangeal joint point;

based on a value range of respective distances between a finger web joint point and two finger joint points closest to the finger web joint point and respective distances between the finger web joint point and the two finger joint points closest to the finger joint point in each of the N second depth image frames before the second depth image, correcting joint point information of the two finger joint points closest to the finger web joint point; or

based on a value range of a bending degree of a finger relative to a palm and a back of a hand and bending degrees in the N second depth image frames before the second depth image, correcting joint point information of a finger joint point.

10. The void correction method of claim 4, after determining the dynamic gesture category information based on the second depth image sequence and the joint point information in the second depth image, the method further comprises:

acquiring original hand contour data from visible light images in the visible light image sequence;
preprocessing the original hand contour data to obtain intermediate hand contour data representing a continuous contour;
generating a G2-continuous smooth curve of a hand contour based on the intermediate hand contour data; and
performing filling and rendering based on the smooth curve of the hand contour.

11. The void correction method of any one of claims 1 to 10, wherein an operation corresponding to dynamic gesture category information is executed in a case where the dynamic gesture category information is obtained; and

in a case where the dynamic gesture category information is not obtained, head ray direction information is acquired, and an operation corresponding to the head ray direction information is executed.

12. The void correction method of claim **11,** wherein the operation comprises: an interactive operation with an exhibit in a museum.

13. The void correction method of any one of claims 1 to 10, wherein determining whether the first depth image is the void-containing depth image based on the first depth image and the visible light image in the visible light image sequence which meets the preset condition comprises:

determining a binary image of the visible light image which meets the preset condition and a binary image of the first depth image;
determining a difference between the binary image of the visible light image and the binary image of the first depth image;
in a case where the difference is less than a first preset threshold, determining the first depth image as a depth image capable of being used as a reference frame; and
in a case where the difference is greater than the first preset threshold, determining the first depth image as the void-containing depth image.

14. The void correction method of any one of claims 1 to 10, wherein determining the void position information in the first depth image comprises:

determining a binary image of the first depth image; and
determining position information of a pixel with a pixel value of 0 in the binary image as the void position information.

15. The void correction method of any one of claims 1 to 10, wherein correcting the depth information of the void corresponding to the void position information based on the N first depth image frames before the first depth image comprises:

acquiring joint point position information in the first depth image;
determining whether the void corresponding to the void position information is within a preset region corresponding to a joint point corresponding to the joint point position information based on the void position information and the joint point position information;
in a case where the void is within the preset region corresponding to the joint point, determining the corrected depth information of the void to be a weighted average of a basic filling value, depth information of the void corresponding to the void position information in the N first depth image frames before the first depth image, and prior information of the joint point; and
in a case where the void is beyond the preset region corresponding to the joint point, determining the corrected depth information of the void based on the basic filling value, depth information between two joint points closest to the void, and the depth information of the void corresponding to the void position information in the N first depth image frames before the first depth image.

16. An electronic device, comprising:

at least one processor; and
a storage device having stored therein at least one program which, when executed by the at least one processor, implements the void correction method of any one of claims 1 to 15.

17. A computer-readable medium having stored therein a computer program which, when executed by a processor, implements the void correction method of any one of claims 1 to 15.

100

```
acquire a visible light image sequence and a first depth image sequence
which have a same frame acquisition frequency
```

101

```
for each first depth image frame in the first depth image sequence,
determine whether a first depth image is a void-containing depth image
based on the first depth image and a visible light image in the visible
light image sequence which meets a preset condition, with the visible light
image which meets the preset condition being a visible light image having
a position corresponding to that of the first depth image; in a case where it
is determined that the first depth image is the void-containing depth image,
determine void position information in the first depth image; and correct
depth information of a void corresponding to the void position information
based on N first depth image frames before the first depth image, with N
being 1 or 2
```

102

```
respectively acquire joint point position information in each second depth
image frame in a second depth image sequence, with the second depth
image sequence being a depth image sequence obtained by correcting all
void-containing depth images in the first depth image sequence
```

103

```
determine dynamic gesture category information based on the second depth
image sequence and joint point information in the second depth image
```

FIG. 1

200

acquire a visible light image sequence and a first depth image sequence which have a same frame acquisition frequency; and perform gesture recognition based on the visible light image sequence and the first depth image sequence to obtain dynamic gesture category information, and execute an operation corresponding to the dynamic gesture category information; or acquire head ray direction information, and execute an operation corresponding to the head ray direction information

FIG. 2

300

acquire a visible light image sequence and a first depth image sequence which have a same frame acquisition frequency

301

for each first depth image frame in the first depth image sequence, determine whether a first depth image is a void-containing depth image based on the first depth image and a visible light image in the visible light image sequence which meets a preset condition, with the visible light image which meets the preset condition being a visible light image having a position corresponding to that of the first depth image; in a case where it is determined that the first depth image is the void-containing depth image, determine void position information in the first depth image; and correct depth information of a void corresponding to the void position information based on N first depth image frames before the first depth image, with N being 1 or 2

302

acquire joint point position information in a second depth image in a second depth image sequence, with the second depth image sequence being a depth image sequence obtained by correcting all void-containing depth images in the first depth image sequence

FIG. 3

400

acquire a visible light image sequence and a first depth image sequence which have a same frame acquisition frequency

401

for each first depth image frame in the first depth image sequence, determine whether a first depth image is a void-containing depth image based on the first depth image and a visible light image in the visible light image sequence which meets a preset condition, with the visible light image which meets the preset condition being a visible light image having a position corresponding to that of the first depth image

402

in a case where it is determined that the first depth image is the void-containing depth image, determine void position information in the first depth image; and correct depth information of a void corresponding to the void position information based on N first depth image frames before the first depth image, with N being 1 or 2

FIG. 4

500

acquire a first data sample for model training, with the first data sample including: a first historical visible light image sequence

501

add annotation information to the first data sample, with the annotation information including: second hand region information

502

perform model training with the first data sample used as input of the hand region acquisition model and the annotation information used as output of the hand region acquisition model to obtain the hand region acquisition model

FIG. 5

600

acquire a second data sample for model training, with the second data sample including: a second historical visible light image sequence and a first historical depth image sequence which have a same frame acquisition frequency

601

input a second historical visible light image in the second historical visible light image sequence into the hand region acquisition model to obtain third hand region information in the second historical visible light image

602

acquire a second target sub-image corresponding to the third hand region information in the second historical visible light image from a first historical depth image in the first historical depth image sequence which has a position corresponding to that of the second historical visible light image; and acquire joint point information in the second target sub-image

603

perform model training with the first historical depth image in the first historical depth image sequence used as input of the hand joint point detection model and the joint point information in the second target sub-image used as output of the hand joint point detection model to obtain the hand joint point detection model

FIG. 6

700

acquire a third data sample for model training, with the third data sample including: a third historical visible light image sequence and a second historical depth image sequence which have a same frame acquisition frequency

701

input a third historical visible light image in the third historical visible light image sequence into the hand region acquisition model to obtain fourth hand region information in the third historical visible light image

702

acquire a third target sub-image corresponding to the fourth hand region information in the third historical visible light image from a second historical depth image in the second historical depth image sequence which has a position corresponding to that of the third historical visible light image; and input the third target sub-image into a hand joint point detection model to obtain joint point information in the third target sub-image

703

annotate the second historical depth image sequence with dynamic gesture category information

704

perform model training with the second historical depth image sequence and the corresponding joint point information used as input of the dynamic gesture model and the dynamic gesture category information corresponding to the second historical depth image sequence used as output of the dynamic gesture model to obtain the dynamic gesture model

FIG. 7

FIG. 8

FIG. 9

## INTERNATIONAL SEARCH REPORT

| International application No. |
|---|
| **PCT/CN2024/087484** |

**A. CLASSIFICATION OF SUBJECT MATTER**

G06T7/55(2017.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 孔, 洞, 光学, 可见光, 彩色, 深度, 比对, 对比, 差异, 差值, 阈值, 二值化, 分割, 前景, 掩模, 时间, 时域, 相邻帧, 前N帧, hole, optical, RGB, depth, contrast, differ, difference, binarization, segmentation, foreground, mask, time, domain, neighbor, frame, front N frames

**C. DOCUMENTS CONSIDERED TO BE RELEVANT**

| Category* | Citation of document, with indication, where appropriate, of the relevant passages | Relevant to claim No. |
|---|---|---|
| Y | CN 115456998 A (YINNIU MICROELECTRONIC (WUXI) CO., LTD.) 09 December 2022 (2022-12-09)<br>description, paragraphs 0055-0135 | 1-8, 10-14, 16-17 |
| Y | CN 111107337 A (YAOKE INTELLIGENT TECHNOLOGY (SHANGHAI) CO., LTD.) 05 May 2020 (2020-05-05)<br>description, paragraphs 0048-0109, and figure 1 | 1-8, 10-14, 16-17 |
| Y | CN 113269089 A (SHANGHAI ARTIFICIAL INTELLIGENCE RESEARCH INSTITUTE CO., LTD.) 17 August 2021 (2021-08-17)<br>description, paragraphs 0079-0107, and figure 2 | 3-8, 10-12 |
| A | CN 104299220 A (SHANGHAI UNIVERSITY et al.) 21 January 2015 (2015-01-21)<br>entire document | 1-17 |
| A | CN 104680496 A (SHANDONG UNIVERSITY) 03 June 2015 (2015-06-03)<br>entire document | 1-17 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 June 2024** | **24 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/087484** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110135340 A (UNIVERSITY OF SCIENCE AND TECHNOLOGY OF CHINA) 16 August 2019 (2019-08-16)<br>entire document | 1-17 |
| A | CN 113608663 A (HARBIN ENGINEERING UNIVERSITY) 05 November 2021 (2021-11-05)<br>entire document | 1-17 |

Form PCT/ISA/210 (second sheet) (July 2022)

**INTERNATIONAL SEARCH REPORT**
Information on patent family members

International application No.

**PCT/CN2024/087484**

| Patent document cited in search report | | | Publication date (day/month/year) | Patent family member(s) | Publication date (day/month/year) |
|---|---|---|---|---|---|
| CN | 115456998 | A | 09 December 2022 | None | |
| CN | 111107337 | A | 05 May 2020 | None | |
| CN | 113269089 | A | 17 August 2021 | None | |
| CN | 104299220 | A | 21 January 2015 | None | |
| CN | 104680496 | A | 03 June 2015 | None | |
| CN | 110135340 | A | 16 August 2019 | None | |
| CN | 113608663 | A | 05 November 2021 | None | |

Form PCT/ISA/210 (patent family annex) (July 2022)

**EP 4 697 266 A1**

**Patent documents cited in the description**

- CN 202310507857